# EUROPÄISCHE PATENTSCHRIFT

(11) **EP 3 145 771 B1**
(45) Veröffentlichungstag und Bekanntmachung des Hinweises auf die Patenterteilung: **07.11.2018**
(21) Anmeldenummer: 15723949.2
(22) Anmeldetag: 20.05.2015
(51) Int. Cl.: B60T 13/74

(54) **BETÄTIGUNGSSYSTEM FÜR EINE FAHRZEUGBREMSE UND VERFAHREN ZUM BETRIEB DES BETÄTIGUNGSSYSTEMS**
ACTUATION SYSTEM FOR VEHICLE BRAKE AND MEHOD FOR ACTUATING A VEHICLE BRAKE
SYSTEME D'ACTUATION D'UN FREIN DE VEHICULE ET METHODE D'ACTUATION DU FREIN

(30) Priorität: 20.05.2014 DE 102014107112; 04.07.2014 DE 102014109384; 09.07.2014 DE 102014109628
(43) Veröffentlichungstag der Anmeldung: 29.03.2017
(73) Patentinhaber: IPGate AG, 8808 Pfäffikon (CH)
(72) Erfinder: LEIBER, Heinz, 71739 Oberriexingen (DE); UNTERFRAUNER, Valentin, 80935 München (DE); KÖGLSPERGER, Christian, 82538 Geretsried (DE); VAN ZANTEN, Anton, 71254 Ditzingen (DE)
(74) Vertreter: Lenzing Gerber Stute
(86) Internationale Anmeldenummer: PCT/EP2015/061105
(87) Internationale Veröffentlichungsnummer: WO 2015/177207

(56) Entgegenhaltungen:
- EP-A1- 2 641 794
- DE-A1-102012 002 791
- DE-A1-102013 203 189
- FR-A1- 2 318 060

## Beschreibung

Die Erfindung betrifft ein Betätigungssystem für eine Fahrzeugbremse gemäß dem Oberbegriff des Patentanspruches 1 und ein Verfahren zum Betrieb des Betätigungssystems.

### Stand der Technik

Die Anforderungen an Bremssysteme steigen. Dies gilt insbesondere auch hinsichtlich Fehlersicherheit und guter Rückfallebene. Wenn der Bremskraftverstärker ausfällt, so soll bei der international vorgegebenen Fußkraft von 500 N eine Verzögerung möglichst größer als 0,64 g erreicht werden, was gegenüber der Mindestanforderung des Gesetzgebers vom 0,24 erheblich mehr bedeutet. Ein Vorteil der hohen erreichbaren Verzögerung ist es auch, dass eine rote Warnlampe, welche den Fahrer irritiert, nicht angesteuert werden muss.

Gelöst werden können diese Forderungen durch Brake-by-wire-Systeme mit Wegsimulator. Hierbei ist der Hauptzylinder (HZ) bzw. TandemHauptzylinder (THZ) für die Rückfallebene bei Ausfall des Bremssystems ausgelegt. Dies erfolgt durch entsprechende Dimensionierung mit kleinem Durchmesser. Dadurch entstehen höhere Drücke bei einer entsprechenden Fußkraft. Das notwendige BremsflüssigkeitsVolumen für 0,64 g und entsprechenden Druck ist relativ klein im Vergleich zu dem bei maximalem Druck bei voller Fahrzeugverzögerung und Fading. Das notwendige Volumen kann ein THZ auch bei größerem Hub nicht voll aufbringen. In der DE 10 2009 043 494 der Anmelderin ist hierfür eine Lösung vorgeschlagen mit Speicherkammer, welche bei höheren Drücken entsprechende Volumen in den Bremskreis einspeist. Ferner ist in der DE 10 2010 045 617 A1 der Anmelderin eine weitere Lösung beschrieben, bei der über entsprechende Ventil- und THZ-Steuerung Volumen vom Hauptzylinder aus dem Vorratsbehälter in den Bremskreis gefördert wird. Bei Fahrzeugen mit großer Volumenaufnahme, z. B. SUV und Kleintransportern, muss die Auffüllung der Bremskreise beim Abbremsen schon vor dem Blockierdruck für high µ notwendig erfolgen. Beide Lösungen stellen eine hohe Anforderung an die Dichtheit der Ventile. Außerdem sind mit der zusätzlichen Auffüllung der Bremskreise eine Unterbrechung des Druckaufbaus und kleine Bremsverluste verbunden.

In der DE 10 2011 111 369 der Anmelderin ist ein System mit Zusatzkolben beschrieben, welches das erforderliche Druckmittelvolumen bringt und den Vorteil hat, dass es von der Motorspindel betätigt wird und in der Rückfallebene nicht wirksam ist, d. h. die vorgegebene Verzögerung ermöglicht. Nachteilig können sich hierbei unter Umständen die entsprechend hohen Kräfte auswirken, welche die Spindel, den Kugel-Gewinde-Trieb (KGT) und die Lager belasten.

Ein weiterer wichtiger Gesichtspunkt ist die Einbaulänge. Hierzu gibt es bei Bremssystemen zwei unterschiedliche Bauformen, die sog. "Serielle Bauform" S und die "Parallele Bauform" P (nachfolgend auch "S-System" bzw. "P-System" genannt). Darunter ist zu verstehen, dass beim S-System die Hauptkomponenten (wie z. B. in DE 10 2011 111 369) der Hauptzylinder THZ, Motor mit Kugel-Gewinde-Getriebe KGT und Hilfskolben in einer Achse angeordnet sind und beim P-System (wie z. B. in DE 10 2012 222 897 A1), der Hauptzylinder THZ in einer Achse und ein Plunger zur Volumenbereitstellung mit Motor in einer seitlich versetzten zweiten Achse angeordnet sind.

Die P-Systeme erfordern weniger Baulänge, sind aber aufwändiger und unterscheiden sich zu S-System auch in der Fehlersicherheit. Gemäß der DE 10 2013 111 974.3 der Anmelderin ist ein P-System mit Doppelhubkolben und THZ ausgeführt, welches in der Baulänge und der Ventilschaltung noch nicht allen Anforderungen genügt.

Ein weiteres zu dem Stand der Technik gehörendes System ist in Patentdokument DE 10 2012 002 791 dargestellt.

### Aufgabe der Erfindung

Der Erfindung liegt die Aufgabe zugrunde, ein System mit kurzer Baulänge und hoher Fehlersicherheit zu gestalten zu schaffen.

### Lösung der Aufgabe

Die erfindungsgemäße Lösung der Aufgabe erfolgt mit den Merkmalen des Patentanspruchs 1.

Vorteilhafte Ausführungsformen bzw. Ausgestaltungen der Erfindung sind in den weiteren Ansprüchen enthalten, auf die hier Bezug genommen wird.

### Vorteile der Erfindung

Mit der erfindungsgemäßen Lösung und ihren Ausführungsformen bzw. Ausgestaltungen wird ein Betätigungssystem für eine Fahrzeugbremse und ein Verfahren zum Betrieb des Betätigungssystems mit verkürzter Baulänge und verbesserter Fehlersicherheit geschaffen. Ferner wird ein derartiges Betätigungssystem mit geringem baulichen Aufwand und reduzierter Druckbelastung bei extremen Pedalkräften geschaffen.

Bei einer vorteilhaften Ausführungsform sind in den hydraulischen Leitungsabschnitten zwischen den Arbeitskammern der ersten Druckquelle bzw. Kolben-Zylinder-Einheit (Hauptzylinder) und dem die ABS/ESP-Regelventile enthaltenden Ventilblock VBL im Gegensatz zu bekannten Systemen keine Schalt- bzw. Trennventile vorgesehen. Die Druckregelung kann in vorteilhafter Weise mit anderen Mitteln, insbesondere vorhandenen Schaltventilen (wie EA bzw. VDK), vorgenommen werden. Von den Arbeitskammern der zweiten Druckquelle bzw. Kolben-Zylinder-Einheit ausgehende hydr. Leitungsabschnitte sind vor dem Ventilblock VBL mit den von den Arbeitskammern der ersten Kolben-Zylinder-Einheit her kommenden Leitungsabschnitten verbunden. In ersterer können insbesondere jeweils ein Rückschlagventil und ein Schaltventil angeordnet sein.

Von diesen Leitungsabschnitten, die zwischen den Rückschlagventilen und den Schaltventilen verbunden sein können, kann zweckmäßig ein weiterer hydr. Leitungsabschnitt zu einer auf der Rückseite eines Kolbens der ersten Druckquelle bzw. Kolben-Zylinder-Einheit (Hauptzylinder) gebildeten Arbeitskammer geführt sein, in der insbesondere ein Schaltventil angeordnet ist.

Eine weitere vorteilhafte Ausführung sieht vor, dass ein Arbeitsraum einer dritten Druckquelle bzw. Kolben-Zylinder-Einrichtung (Hilfskolben) mittels einer hydraulischen Leitung, in der insbesondere eine Ventileinrichtung angeordnet ist, mit zumindest einem Arbeitsraum der zweiten (DHK) und/oder der ersten Druckquelle bzw. Kolben-Zylinder-Einheit (Hauptzylinder) verbunden ist.

Ferner wird durch die Erfindung bzw. ihre Ausführungsformen/Ausgestaltungen ausreichend Bremsflüssigkeitsvolumen bereitgestellt mit einer zusätzlichen Vorfüll- (Prefill)-Funktion.

Auch werden weitere Verbesserungspotenziale, insbesondere ausgehend von einer Bremsvorrichtung gemäß der Patentanmeldung DE 10 2013 111 974.3 der Anmelderin mit teilweise P-Bauform und DE 10 2014 102 536.9 mit Doppelhubkolben DHK und Vorfüllfunktion bei S-Bauform (auf die hiermit Bezug genommen wird) erschlossen.

Die in den Anmeldungen DE 10 2013 111 974.3 und DE 10 2014 102 536.9 der Anmelderin (deren Inhalt hier durch Bezugnahme aufgenommen wird) beschriebenen Lösungen bzw. deren Hauptmerkmale können vorteilhaft auch bei der Erfindung bzw. ihren Ausführungen/Ausgestaltungen zur Anwendung kommen bzw. übertragen werden, wie z. B. fehlersicherer adaptiver Wegsimulator mit Hilfskolben und Einspeisefunktion in der Rückfallebene, Vorfüllfunktion mit ihren jeweiligen Vorteilen wie kurze Baulänge, Minimierung des Aufwandes, kleine Pedalanfangskraft, möglichst vergleichbar mit der S-Bauform.

Das System mit serieller (S) Anordnung von THZ und Motor baut länger als das parallele (P) System, bei dem THZ und Motor in getrennten Achsen angeordnet sind. Das P-System ist jedoch aufwändiger mit Gehäusen und Ventilen. Für die dargestellten umfangreichen Funktionen und Dimensionierungen soll der Aufwand des P-Systems reduziert bzw. auch die Funktionen erweitert werden.

Durch die hydraulische Verbindung des Doppelhubkolbens DHK mit der Sekundärseite des Druckstangenkolbens DK entsteht beim P-System eine ähnliche Funktion wie beim S-System, bei dem anstelle des hydraulischen Drucks der Motorantrieb auf den Druckstangenkolben DK einwirkt. Damit sind viele Vorteile verbunden, z. B. die Kolben werden mit realem Druck und auch Kolbenweg belastet, insbesondere der Druckstangenkolben DK, die Fehlererkennung ist einfacher, die Volumenzufuhr in die Bremskreise ist durch verschiedene Ventilanordnungen variabler. Darüber hinaus können mindestens ein Trennventil in der Verbindung vom Doppelhubkolben DHK eingespart werden. Ebenso können die Magnetventile für den Doppelhubkolben DHK reduziert und auch das Einspeiseventil eingespart werden.

Die Kolben-Zylinder-Einheit bzw. der Doppelhubkolben kann auch durch eine Druckquelle mit kontinuierlicher Förderung ersetzt werden, z.B. eine elektromotorisch angetriebene Hochdruckpumpe.

Die für die Bremskreisöffnung zum Druckabbau eingesetzten Ventile werden bei jeder Bremsung auf Dichtheit geprüft.

Darüber hinaus kann durch alternierende Schaltung der Ventile EA ein Druckgeber eingespart werden, da die Volumenförderung durch den Doppelhubkolben DHK im Vergleich zur Druck-Volumen-Kennlinie und Druck sowohl die Volumenaufnahme als auch Leck oder Bremskreisausfall erkennt.

Der bei der S-Ausführung vorgeschlagene Leerweg zur Baulängenverkürzung und Vorteile bei Rekuperation, indem der THZ-Motor und Doppelhubkolben DHK nicht betätigt wird, kann auch bei der P-Version eingesetzt werden. Damit ist ein erheblich reduzierter Verschleiß möglich.

Weitere Merkmale und Vorteile der Erfindung bzw. ihrer Ausgestaltungen ergeben sich aus den Ansprüchen bzw. der nachfolgenden Figurenbeschreibung, auf die hier Bezug genommen wird.

### Beschreibung der Figuren

Es zeigen:
- Fig. 1: ein System in P-Version mit reduziertem Aufwand;
- Fig. 1a: eine Zusatzfederanordnung im Schwimmkolben SK;
- Fig. 2: ein System wie Fig. 1 mit vereinfachter Ventilschaltung eines Doppelhubkolbens DHK;
- Fig. 2a: ein System mit einer Hochdruckpumpe, anstelle einer Kolben-Zylinder-Einheit;
- Fig. 3: ein System wie Fig. 1 mit zusätzlichen Ventilen vom Tandemhauptzylinder zum Vorratsbehälter;
- Fig. 4: ein System in P-Bauform mit parallel liegendem Doppelhubkolben (DHK3) mit drei wirksamen Kolbenflächen;
- Fig. 5: ein System in P-Bauform vereinfacht mit parallel liegendem Doppelhubkolben (DHK2) mit zwei Kolben;
- Fig. 5a: ein System mit vereinfachter Zwei-Kolben-Version;
- Fig. 6: ein System in P-Bauform mit einem parallel angeordneten Motor mit Antriebsriemen;
- Fig. 7: eine besonders einfache Ausführung (Minimalversion)des Systems mit zusätzlicher Baulängenverkürzung,
- Fig. 7a: eine Federanordnung;
- Fig. 7b: Federkennlinien; und
- Fig. 7c: eine Schnüffellochanordnung.

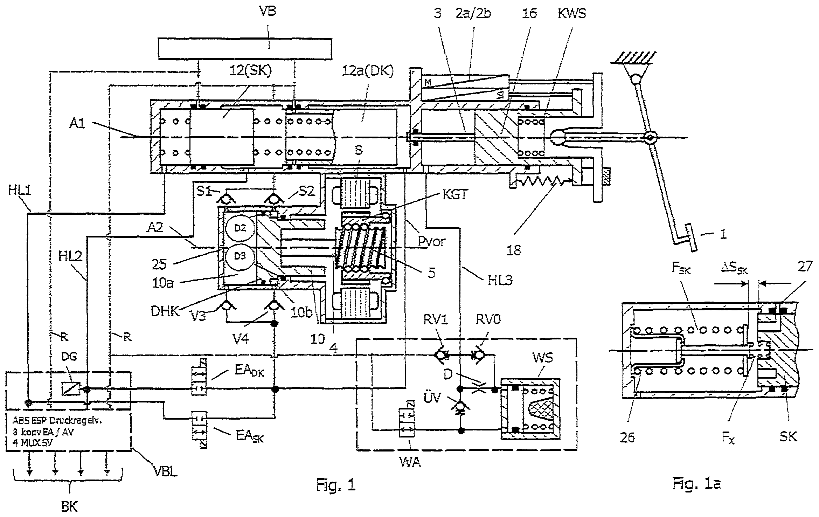

Das in Figur 1 dargestellte System stellt ein Minimum des Aufwandes für eine Minimalfunktion dar. Bei dieser P-Bauform, bei der auf einer ersten Achse A1 eine (erste) Kolben-Zylinder-Einheit (Hauptzylinder) mit Druckstangen-Kolben (DK) 12a und Schwimmkolben (SK) 12 und eine weitere (zweite) Kolben-Zylinder-Einheit mit einem Kolben 16 (Hilfskolben), liegen und auf einer zweiten Achse A2, die bezüglich der ersten Achse seitlich bzw. radial versetzt ist, eine Kolben-Zylinder-Einheit mit einem Doppelhubkolben (DHK), einem Kugel-Gewinde-Getriebe (KGT), mit Spindel 5 und einem Antriebsmotor 8 liegen. Die Kolben-Zylinder-Einheit mit Hilfskolben kann auch auf einer parallelen Achse angeordnet sein, wie z.B. in der Patentanmeldung DE 10 2011 017 436.2 der Anmelderin, bei der der Pedalstößel auf der Mittelachse des Hauptzylinders angeordnet ist und zwei Hilfskolben auf dazu parallel versetzten Achsen. Von Arbeitskammern der ersten Kolben-Zylinder-Einheit (hauptzylinder bzw. THZ) sind hydraulische Leitungen HL1 und HL2 (ohne Trennventile) über einen Ventilblock (VBL) mit (nicht dargestellten) Radbremsen verbunden. Von Arbeitskammern 10a, 10b der Kolben-Zylinder-Einheit mit Doppelhubkolben (DHK) verlaufen Leitungsabschnitte, in denen Rückschlagventile V3, V4 angeordnet sind und ein gemeinsamer Leitungsabschnitt, der zu zwei weiteren hydraulischen Leitungsabschnitten führt, in denen (stromlos geschlossene) Schaltventile EA angeordnet sind zu den hydraulischen Leitungen HL1, HL2 bzw. über den Ventilblock VBL zu den Radbremsen. Die Arbeitskammern 10a, 10b des Doppelhubkolbens sind mit anderen Worten über die genannten Leitungsabschnitte und Ventile EA mit den Arbeitskammern der ersten Kolben-Zylinder-Einheit hydraulisch verbunden. Vom gemeinsamen Leitungsabschnitt zweigt ein weiterer Leitungsabschnitt ab, der mit einer Arbeitskammer 12c verbunden ist, die von der Rückseite des Kolbens (DK) der ersten Kolben-Zylinder-Einheit gebildet wird.

Von den Arbeitskammern 10a und 10b des Doppelhubkolbens verlaufen ferner hydraulische Leitungen (gestrichelt dargestellt), in die Rückschlagventile S1 und S2 geschaltet sind, zu einem Vorratsbehälter VB.

Eine Wegsimulatoreinrichtung mit einem Wegsimulator WS mit Kolben, Rückschlagventilen RV0, RV1 und ÜV, sowie einer Blende D und einem Magnetventil WA ist über eine hydraulische Leitung HL3 mit einer Arbeitskammer der Kolben-Zylinder-Einheit mit Hilfskolben 16 verbunden und entspricht dem in den Patentanmeldungen DE 10 2013 111 974.3 und DE 10 2014 102 536.9 der Anmelderin, auf die diesbezüglich Bezug genommen wird, beschriebenen Wegsimulator. Das Überdruckventil ÜV hat hier zwei Funktionen: in der Normalfunktion bei hoher Pedalgeschwindigkeit die Drosselkraft zu reduzieren und ebenfalls in der Rückfallebene RFE, damit der Fahrer die Pedalkraft schneller in Druck umsetzen kann. Die Wegsimulatoreinrichtung kann zweckmäßig parallel zum THZ oder auch im Ventilblock VBL angeordnet sein.

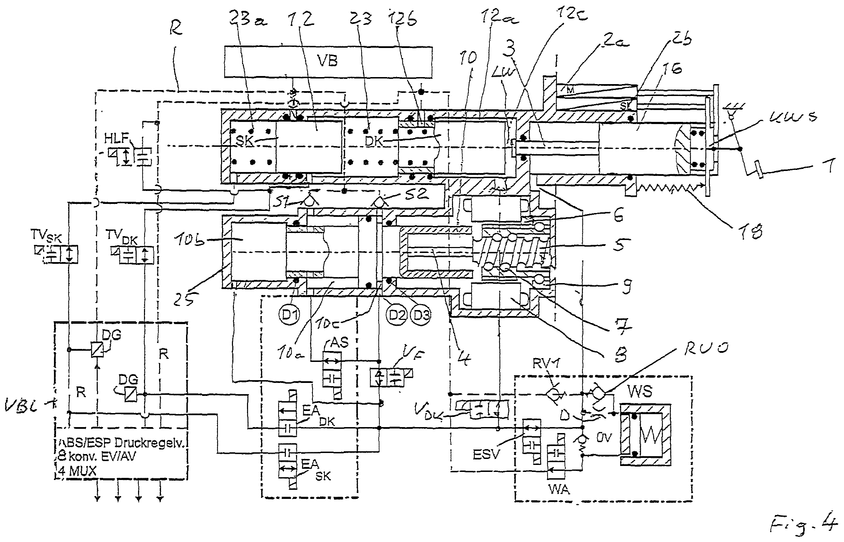

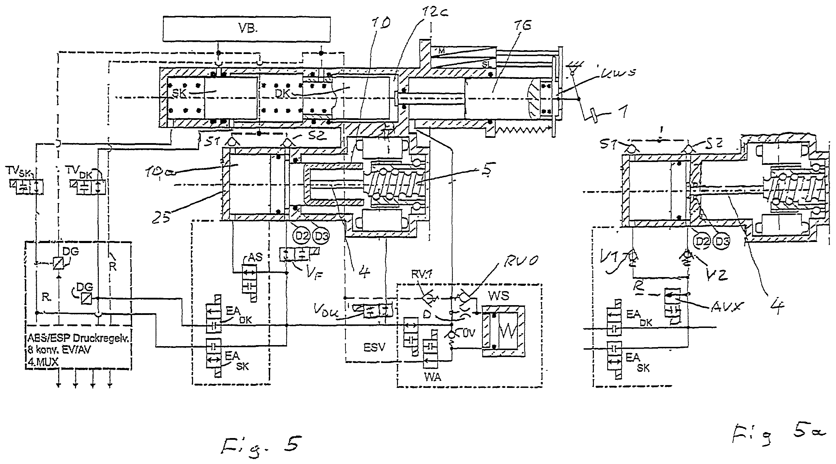

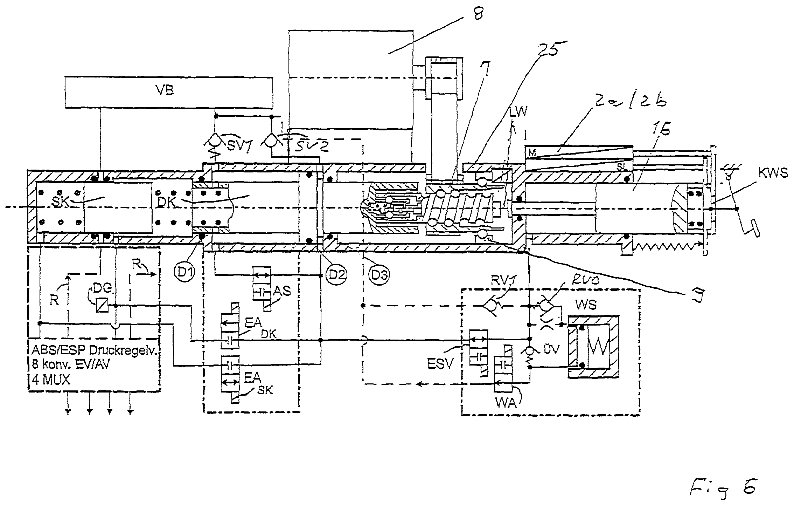

Die Arbeitsräume des Druckstangenkolbens DK und des Schwimmkolbens SK sind über hydraulische Leitungsabschnitte HL1 und HL2 mit dem Ventilblock VBL verbunden, wobei in diesen Leitungsabschnitten keine Ventile, insbesondere keine Schaltventile angeordnet sind (im Unterschied zu den Ausführungen gem. Figuren 4 und 5. Beim Druckaufbau P_{auf} mittels des Doppelhubkolbens DHK erfolgt zunächst eine Volumenzufuhr von der Arbeitskammer 10a des Doppelhubkolbens DHK in die Arbeitskammer 12c des Druckstangenkolbens, d.h. auf die Rückseite des Druckstangenkolbens DK der Kolben-Zylinder-Einheit (THZ), so dass die Kolben DK und SK Druck in ihren Druckkammern bzw. den Leitungen HL1, HL2 aufbauen bzw. erhöhen. Im Gegensatz zu der in Figur 6 dargestellten Ausführung wird somit von der Kolben-Zylinder-Einheit (THZ) das Volumen bzw. der Druck über die (nicht gezeichneten) Druckregelventile im Ventilblock VBL direkt zu den Bremskreisen (BK) bzw. den Radbremsen geleitet. Pedalwegsensoren 2a, 2b bestimmen den Druck in den Bremskreisen BK, was durch über den Antrieb des Doppelhubkolbens DHK und entsprechende Volumenzufuhr bewirkt wird. Der Wegsimulator WS bestimmt die Pedalkraftcharakteristik. Bei einem Weg ΔWS ist dieser Wegsimulator ausgesteuert, was ca. 40% des gesamten Weges des Pedalstößels ausmacht. Die Volumenzufuhr kann bei einem ersten Betriebsmodus 1 bei dem entsprechenden Weg geändert werden, indem durch Öffnen der beiden Ventile EA Volumen direkt aus der Arbeitskammer des Doppelhubkolbens DHK in die den Kolben DK und SK zugeordneten hydraulischen Leitungen gelangt. Dabei verharren die Kolben DK und der SK in der Position, welche durch den Weg des DK-Kolbens gegeben ist bzw. den Federkräften der Federn der Kolben DK und SK. Durch die Schaltung der Ventile EA ist praktisch auf beiden Seiten der Kolben SK und DK derselbe Druck, so dass der Druckstangenkolben DK am Pedalstößel (PS) 3 anliegt, sofern die Federn entsprechend abgestimmt sind. Dies kann definiert mit einer Zusatzfeder erfolgen, wie diese zum Beispiel bezüglich Figur 1a beschrieben ist.

Mit einer progressiven Federcharakteristik des Schwimmkolbens SK wird erreicht, dass der Druckstangenkolben DK beim Aussteuerweg ΔWS verharrt und der Schwimmkolben SK einen bestimmten Abstand zum Druckstangenkolben DK hat.

Das Anliegen des Druckstangenkolbens DK an den Pedalstößel 3 wird vorzugsweise bei ABS-Funktion (Betriebsmodus 2) verwendet. Die ABS-Funktion kann auch vor dem vollen Aussteuerweg ΔWS erfolgen, da hierbei der max. Bremsdruck z. B. 200 bar eingesteuert ist. Die ABS-Funktion kann bei low µ bereits bei 10 bar und entsprechend kleinem Weg des Pedalstößels 3 erfolgen. Auch hierbei soll der Druckstangenkolben DK am Pedalstößel 3 anliegen. Dies bedingt bei weiterer Bewegung des Pedalstößels 3 zusätzliche Gegenkräfte durch Reibung und Federkräfte und Druckkraft über den Pedalstößel 3. Diese ist durchaus vorteilhaft, weil eine kleine Rückwirkung von ABS auf das Pedal 1 erwünscht ist. Dies kann noch verstärkt und moduliert werden durch Variation des Vordruckes Pvor mittels des Doppelhubkolbens DHK.

Die Ausgangsstellung des Schwimmkolbens SK mit Hubreserve ist von großer Bedeutung für den "worst case" Ausfall des Motors bei low µ und anschließendem positiven µ-Sprung. Hierbei kann der Schwimmkolben SK nur genügend Volumen liefern, wenn er ausreichend Hub hat und nicht bereits am Gehäuseende anliegt. Mit der vorgenannten Abstimmung liefern die Kolben SK und DK über den Resthub Volumen, ohne dass es zu einem Aufeinandertreffen der Kolben DK und SK kommt, bei der dann nachteilig asymmetrische Bremsdrücke entstehen würden.

Zur Diagnose der Position des Schwimmkolbens SK kann dieser mit einem hier nicht gezeichneten Sensor ausgeführt werden.

Der Druckaufbau P_{auf} erfolgt so lange wie die Pedalwegsensoren 2a / 2b dies der Motorsteuerung vorgeben. Reicht für hohes Druckniveau oder Volumen, z. B. bei Fading, das Volumen des Doppelhubkolbens DHK im Vorhub über das Überdruckventil S1 nicht aus, so erfolgt im Rückhub eine weitere Volumenförderung über das Ventil S2.

Mit dieser Ventilschaltung der Saugventile S1 und S2 mit Überdruckventil V3 und V4 sind vom Doppelhubkolben DHK keine Zusatzfunktionen wie Vorfüllen oder Druckabbau P_{ab} möglich. Diese werden in nachfolgenden Figuren mit zusätzlichem Ventilaufwand beschrieben.

Die zur Druckregelung notwendigen acht Ventile (vier Einlassventile EV und vier Auslassventile AV) oder alternativ vier Schaltventile SV bei Multiplexbetrieb MUX sind im Ventilblock VBL enthalten.
Bei ABS-Funktion wirkt der Doppelhubkolben DHK mit Vorhub und Rückhub permanent, da das für den Druckabbau P_{ab} über die Auslassventile AV entnommene Volumen wieder nachgefördert werden muss. Erfolgt ein durch die Pedalsensoren 2a / 2b veranlasster Druckabbau P_{ab}, so erfolgt dies ebenfalls über die Ventile AV in den Rücklauf R. Vorzugsweise erfolgt dies nur über ein Ventil AV, z. B. im DK-Kreis bei geöffneten Ventilen EA.

Zum minimalen Aufwand gehört auch nur ein Druckgeber DG.
Es ist möglich den Druck in beiden Bremskreisen mit nur einem Druckgeber zu bestimmen, da der Schwimmkolben 12 einen Druckausgleich zwischen den beiden Bremskreisen herstellt.
Dies erfolgt unabhängig von der Schaltstellung der E/A Ventile. Erfolgt ein Druckaufbau durch den Doppelhubkolben DHK über die E/A Ventile direkt in die Bremskreise (z.B. bei ABS) ist es möglich durch sogenanntes alternierendes Schalten der Ventile EA vom Doppelhubkolben DHK jeweils nur in den jeweiligen Bremskreis zu fördern, so dass die Bremskreise niemals direkt miteinander verbunden sind.

Die Funktionen des Doppelhubkolbens DHK und des Wegsimulators WS sind auch in den Patentanmeldungen DE 10 2010 045 617 A1, DE 10 2013 110 188.7, DE 10 2014 102 536.9, DE 10 2014 107 112.3 der Anmelderin beschrieben, auf die hiermit diesbezüglich Bezug genommen wird.

Fig. 1a zeigt eine Federanordnung mit Zusatzfeder am Schwimmkolben SK. Hier wird ein Federgehäuse 26 mit Schwimmkolben-Feder F_{SK} gezeigt, wie es Standard ist bei Tandemhauptzylindern THZ. Zusätzlich wirkt hier eine zwischen dem Schwimmkolben und Federgehäuse angeordnete Feder F_{X}, die der Anfangsfederkraft der konventionellen Feder des Schwimmkolbens SK entspricht. Diese ist bekanntlich so ausgelegt, dass hierdurch der Schwimmkolben SK und Druckstangenkolben DK zurück gestellt werden und die Reibungskräfte überwinden. Dagegen ist die Feder des Druckstangenkolbens DK gefesselt auf ein höheres Kraftniveau. Damit bei entsprechender progressiver Federauslegung des Schwimmkolbens SK erreicht wird, dass beim Druckaufbau P_{auf} beide Kolben DK und SK gleichzeitig das Schnüffelloch 27 bzw. das hier nicht gezeichnete Schnüffelloch des Druckstangenkolbens DK (in Fig. 1a in der Offenstellung gezeichnet) schließen. Auch bei dieser Anordnung ist dies der Fall durch entsprechende Dimensionierung von F_{X}, welche dieselbe Kraft hat wie eine konventionelle Feder des Schwimmkolbens SK. Im Normalfall beim Druckaufbau P_{auf} wird der Abstand von Schwimmkolben SK und Druckstangenkolben DK bestimmt durch die Volumenaufnahme der Bremskreise, wobei die Druckkräfte die Federkräfte überwiegen. Im o. g. Fall entsteht durch Parallelschaltung der Ventile EA ein nahezu gleiches Druckniveau, so dass die Druckkräfte entfallen und die jeweils wirkenden Feder- und Reibungskräfte die Position der Kolben bestimmen. In dem geschilderten Fall soll bei Parallelschaltung der Ventile EA der Druckstangenkolben DK am Pedalstößel PS anliegen, was durch Federabstimmung möglich ist.

Bei höheren Temperaturen und keinem Regen (wenn somit normalerweise kein µ-Sprung möglich ist) kann Betriebsmodus 1 eingeschaltet werden, bei der die Parallelschaltung von Ventil EA nicht erfolgt und der Schwimmkolben SK und gegebenenfalls auch der Druckstangenkolben DK bis zum Hubende bewegt werden. Dies hat den Vorteil, dass die Dichtungen jeweils über den gesamten Hub geprüft werden können, so dass sogenannte "schlafende Fehler" nicht möglich sind.

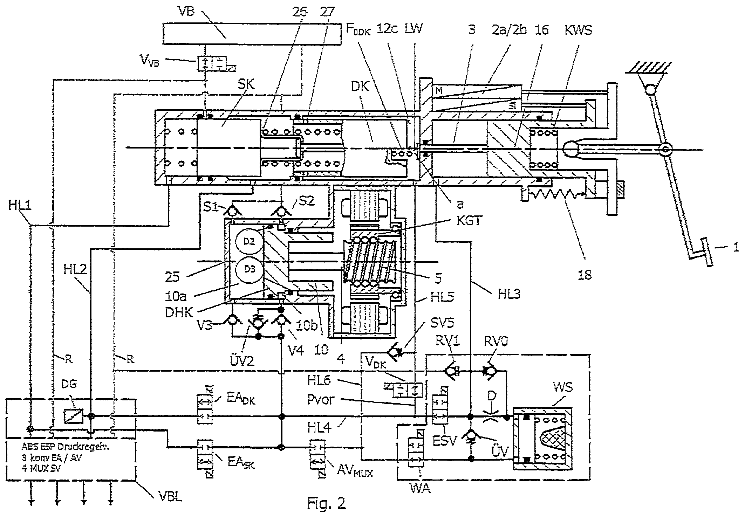

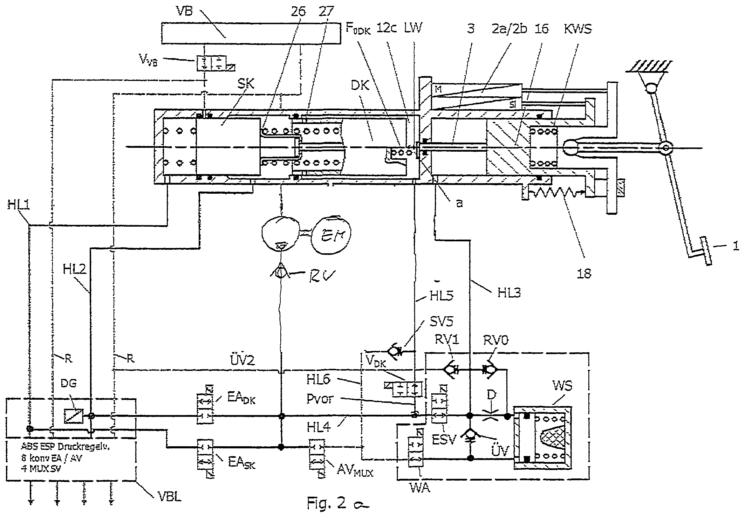

Fig. 2 zeigt die nächste Ausbaustufe mit Ventilen ESV im Leitungsabschnitt HL4 und V_{DK} im Leitungsabschnitt HL5 und mit SV5 im Leitungsabschnitt HL6 und entsprechend erweiterten Funktionen.

Bekanntlich hat das Einspeisen ES von Zusatzvolumen in die Bremskreise BK große Vorteile in der Rückfallebene RFE, da das zusätzliche Volumen ein höheres Druckniveau oder kürzere Pedalwege ergibt. Das Einspeisen ES erfordert aber, dass das Ventil V_{DK} geschlossen ist, damit ein Druckausgleich, welcher bei geöffneten Ventil EA erfolgt, hier beim Einspeisen ES verhindert wird. Damit ist das Einspeisen über das Ventil EA beliebig in einen Bremskreis BK oder beide gemeinsam möglich. Da beim Einspeisen Druckkräfte sowohl vom Hilfskolben 16 als auch vom Druckstangenkolben DK auf das Pedal 1 wirken, ist das Einspeisen ES bis zu Drücken z. B. von 20 - 25 % des Blockierdrucks z. B. 20 - 25 bar wegen zu hohen Pedalkräften beschränkt. Nach dem Einspeisen ES wird das Ventil ESV geschlossen (Betriebsmodus 5). Dies ist effektiv mit 30 - 40 % Mehrvolumen in der Rückfallebene RFE. Da die Drücke in der Rückfallebene RFE geringer sind als im Normalfall, kann das Ventil V_{DK} im schaltbaren Druckbereich entsprechend geringer ausgelegt werden. Das ermöglicht größere Querschnitte oder geringere Magnetkräfte, was kostenrelevant ist.

Da bei geschlossenem Ventil V_{DK} der Druckstangenkolben DK über den Pedalstößel PS bewegt wird, ist das Ventil SV5 erforderlich, um bei der Kolbenbewegung Unterdruck zu vermeiden. Beim Druckabbau P_{ab} wird das Ventil V_{DK} geöffnet, und das Volumen gelangt über offenes Ventil ES und WA in den Vorratsbehälter VB oder über Ventile EA und AV ebenfalls in den Vorratsbehälter VB.

Es kann hier ein Leerweg LW zwischen Pedalstößel 3 und dem Druckstangenkolben DK eingesetzt werden, was in Verbindung mit Ventil ESV Vorteile bringt, nämlich keine Aktivierung des Doppelhubkolbens DHK und des Motors für Druckaufbau und Druckabbau bzw. keine Kolbenbetätigung bei Rekuperation und eine Baulängenverkürzung.

Die Ausgestaltung des Druckstangenkolbens DK ist hier nicht entsprechend Standard wie beim konventionellen THZ mit zwei Dichtungen (die zweite Dichtung dient bei diesem dazu, Lecköl nach außen zu vermeiden). In Fig. 4 und 6 ist z.B. der Druckstangenkolben DK mit dem Doppelhubkolben DHK als 3-Kolben-Lösung verbunden und hat vorteilhaft nur eine Dichtung zu seinem Druckraum. Auch diese Ausführung mit nur einer Dichtung D1 kann hier ohne Kombination mit dem Doppelhubkolben DHK und ohne Stufenkolben beim nicht gestuften zylindrischen Druckstangenkolben DK eingesetzt werden. Dies erfordert hier jedoch eine Kopplung des Federgehäuses 26 mit dem Schwimmkolben SK. Dies ist notwendig, damit beim Druckaufbau P_{auf} der Kolben SK den Kolben DK im Normalfall über das Schnüffelloch 27 des Druckstangenkolbens zieht, da hier das Volumen vom Doppelhubkolben DHK über das offene Schnüffelloch 27 des Druckstangenkolbens DK in den dem Kolben DK zugeordneten Bremskreis strömt und der entsprechende Druck auf den dem Kolben SK zugeordneten Bremskreis wirkt. Bei weiterem Druckaufbau und geschlossenem Schnüffelloch des Druckstangenkolbens DK wirkt auf der Rückseite des dem Kolben DK zugeordneten Bremskreises der Vordruck und bewegt den Kolben DK zum weiteren Druckaufbau weiter. Dies geschieht dadurch, dass in der ersten Phase des Druckaufbaus P_{auf} das Ventil EA des Druckstangenkolbens DK auf ist bis durch entsprechendes Volumen des Doppelhubkolbens beide Schnüffellöcher geschlossen sind, da hier der Druck des Druckstangenkolbens DK auf den Schwimmkolben SK wirkt. Anschließend wird das Ventil EADK wieder geschlossen und der Vordruck Pvor wirkt auf den Druckstangenkolben DK zum Druckaufbau (Betriebsmodus 4)

Bei der Bremsung findet oft eine Phase konstanten Druckes (d.h. keine Pedalwegänderung) statt in der Wegsimulator Stufe 1 (Druckbereich < 30 bar). Dies wird genutzt zur Diagnose der Dichtheit aller Komponenten, inklusive der Ventile EA. Hierbei wird Ventil VDK und Ventil EA geschlossen, die Motorstellung wird nicht verändert, die Ventile ESV und WA sind offen, dabei darf bei Dichtheit aller Komponenten der Bremskreise kein Druckabbau erfolgen. Insbesondere die Ventile EA werden praktisch bei jeder Teilbremsung (80 %) aller Bremsungen getestet.

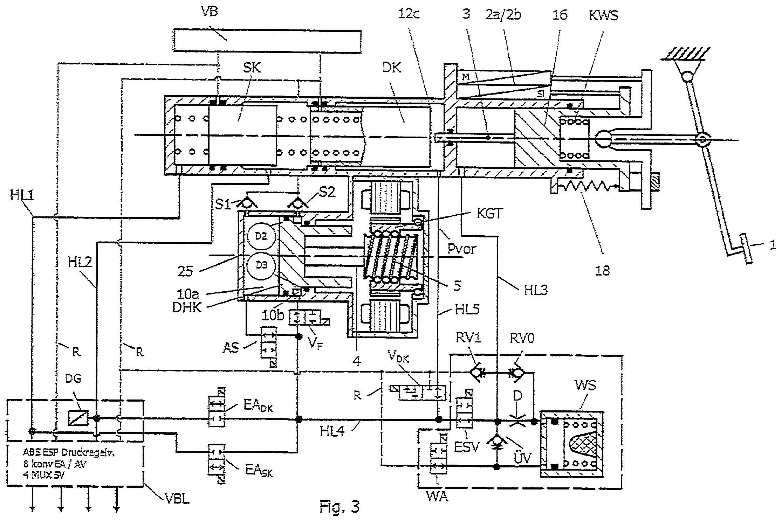

Vorteile der Ausführung gemäß Figur 2 sind:
- Bei Ausfall der Druckstangenkolben DK-Sekundärdichtung erfolgt im Gegensatz zu Fig. 1 und 3 kein Ausfall des Bremskraftverstärkers BKV. Auch bei Ausfall der DK-Dichtung in Fig. 2 fällt der Bremskraftverstärker BKV nicht aus. Die Funktion der Dichtung muss in Abständen geprüft werden, was z. B. bei Fahrzeugstillstand erfolgen kann.
- geringere Kolbenreibung
- geringere Belastung der Dichtungsmanschetten, da das Volumen beim Druckaufbau P_{auf} die Manschette öffnet
- Ausführung mit Leerweg LW möglich, da das Einspeisevolumen am Hilfskolben über das Schnüffelloch direkt in den Druckstangen DK-Kreis gelangt.

Bekanntlich muss das Bremssystem auch für höchste Pedalkräfte ausgelegt werden, die mehr als Faktor 12 ausmachen im Vergleich der Pedalkraft zum Erreichen des Blockierdrucks. Dies wirkt sich aus auf die Druckbelastung des Hilfskolbens, das Gehäuse des Hilfskolbens und Ventile ESV und WA. Hierfür gibt es mit der vorhandenen Ventilschaltung eine einfache Lösung. Tritt dieser Fall auf und das auf niedriges Druckniveau z. B. 200 bar ausgelegte Ventil WA öffnet bei diesem Druck, so erfolgt eine Pedalbewegung, was durch die Pedalsensoren 2a / 2b gemessen wird. Dies führt zum Schließen von Ventil V_{DK}. Der Pedalstößel wirkt auf den Druckstangenkolben DK, es entsteht Unterdruck auf der Sekundärseite des Druckstangenkolbens DK. Auf der Primärseite wirkt der Druck des Druckstangenkolbens, der bei o. g. Signal auf 200 bar erhöht werden kann. Damit wird die hohe Pedalkraft von zwei anstelle von einem Kolben ausgeglichen, was zu einer deutlichen Reduzierung des Druckniveaus bei o. g. Komponenten führt (Betriebsmodus 5).

Bei Ausfall des Wegsimulators, z. B. durch Undichtheit, fällt normalerweise die Funktion des Wegsimulators WS aus, d. h. die Pedalkraftrückwirkung fehlt. Es wurde schon bei den Patentanmeldungen DE 10 2014 102 536.9 und DE 10 2014 107 112.3 der Anmelderin ausgeführt, dass bei der gezeigten Wegsimulator-Anordnung mit Hilfskolben 16 die Möglichkeit besteht, auf sog. Folge-Bremskraftverstärkung umzuschalten, so dass wie beim konventionellen Vakuum-Bremskraftverstärker die Pedalkraft zum Bremskraftverstärker mitwirkt, bei der gegebenenfalls längere Pedalwege in Kauf genommen werden müssen.

Auch beim System nach Fig. 2 ist ein Ausfall des Wegsimulators möglich. Nach Betätigung des Bremspedals wirkt in der ersten Stufe nur die Rückstellfeder 18 auf die Pedalkraft, d. h. der Druckabbau P_{ab} erfolgt wie beschrieben durch entsprechende Motorsteuerung über die Pedalwegsensoren 2a/2b. Der Ausfall des Wegsimulators WS wird erst erkannt, wenn das Ventil WA bei einem bestimmten Pedalweg schließen sollte. Ist dies nicht der Fall, z. B. auch durch ausgefallene Dichtungen, so wird dies über den Kraft-Weg-Sensor KWS erkannt. Anschließend erfolgt der Druckaufbau P_{auf} normal nach dem Signal der Pedalwegsensoren 2a / 2b. Hierbei wird auch Volumen bzw. Druck auf die Rückseite des Druckstangenkolbens DK und parallel zum Vorfüllen der Bremskreise BK über beide Ventile EA eingesteuert, d. h. es fehlt nur die Gegenkraft des Wegsimulators WS. Eine kleine Gegenkraft wirkt auf den Pedalstößel. Eine größere Gegenkraft kann erzeugt werden durch Schließen des Ventils V_{DK}. Durch Unterdruck wirkt dann die volle Druckkraft des Druckstangenkolbens DK auf den Pedalstößel PS 3. Durch Ansteuerung des V_{DK}-Ventils über Pulsweitenmodulation PWM kann mit Hilfe des Kraft-Weg-Messelements KWS eine Gegenkraft erzeugt werden. Eine Alternative besteht hier durch Schließen der Ventile EA nach dem Vorfüllen. Anschließend wirken Pedalkraft und Motorsteuerung mit entsprechender Volumenzufuhr als Folge der Bremskraftverstärkung (Betriebsmodus 7). Hierbei kann die Bremskraftverstärkungswirkung ggf. reduziert werden. Zum Vorfüllen kann bei dieser Ventilanordnung mit Ventilen V3 und V4 anstelle eines zusätzlichen Magnetventils (siehe z.B. Ventil VF in Fig. 3) ein Überdruckventil ÜV2 eingesetzt werden, das insbesondere in einer Verbindungsleitung zwischen den die Rückschlagventile V3, V4 enthaltenden Leitungsabschnitten angeordnet ist, wobei z.B. bis 30 bar ein Vorfüllen mit großer Kolbenfläche erfolgt und danach über 30 bar Volumen zum Druckausgleich auf die Rückseite des Doppelhubkolbens DHK strömt. Damit wirkt bis 30 bar die große Kolbenfläche des Doppelhubkolbens DHK und bei > 30 bar infolge des Druckausgleiches eine kleinere effektive Fläche zur Volumenförderung.

Für die Anwendung des Multiplexverfahrens (MUX) zur Druckmodulation ist für die Druckabbaufunktion beim Bremskraftverstärker-Betrieb ein Ventil AVMUX erforderlich. Dabei kann bei geöffneten Ventilen EA Volumen zum Druckabbau in den Rücklauf gelangen sofern ein Druckaufbau für zusätzliches Volumen mit Rückhub (RH) (Fading) über den Doppelhubkolben DHK erfolgt. Im normalen Bremsbetrieb ist dieses Ventil AVMUX nicht notwendig.

Ein Ausfall der Sekundär-Dichtung des Schwimmkolbens ist auch zu betrachten. Grundsätzlich wirkt im Normalfall (kein Ausfall) der Pᵥₒᵣ auf den Druckstangenkolben DK und verschiebt den Kolben DK zum Druckaufbau in beiden Bremskreisen. Für o. g. Fall würde das Volumen vom VDK über das Schnüffelloch des Druckstangenkolbens DK und die ausgefallene Dichtung abfließen. Dies kann durch folgende Maßnahmen verhindert werden:
- die Schnüffellöcher wirken als Drossel, so dass der Staudruck vor dem Druckstangenkolben DK den DK-Kolben bewegt;
- in der Rücklaufleitung vom Schwimmkolben SK zum Vorratsbehälter VB wird ein Ventil VVB eingeschaltet, welches im Fehlerfall schließt oder bei jedem Bremsvorgang kurzzeitig schließt bis ein entsprechender Hub des Kolbens DK erfolgt bei dem das Schnüffelloch des Schwimmkolbens SK sicher geschlossen ist;
- eine Zusatzfeder am Druckstangenkolben DK mit Abstand zum Pedalstößel PS. Diese ist mit einer Kraft vorgespannt größer als die Vorspannung der SK-Feder, so dass der PS nach dem Abstand a den DK-Kolben bewegt und damit das Schnüffelloch am Druckstangenkolben DK schließt. Dann wirkt Pvor und der DK trifft auf den Schwimmkolben SK zum Druckaufbau im Schwimmkolben SK und bei Ausfall des DK-Bremskreises. Der BKV-Betrieb ist damit nicht gefährdet.

Ohne Ausfall wirkt die Zusatzfeder nicht, da der DK-Kolben durch den Pvor-Druck bewegt wird, s. auch Betriebsmodus.

Figur 2a zeigt eine Alternative zum Doppelhubkolben DHK, mit einer von einem Elektromotor angetriebenen Pumpe. Diese kann eine Zahnrad-, Zellen- oder Kolbenpumpe sein. Der Motor kann zweckmäßig ein EC-Motor sein. Eine Kolbenpumpe braucht kein zusätzliches Rückschlagventil im Gegensatz zu einer Flügelzellenpumpe, da es Betriebszustände mit konstantem Druck ohne Volumenförderung gibt, so dass hier kein Rückfluss erfolgt. Wenn für den Bremskraftverstärker BKV-Betrieb der Druckabbau nicht über Auslassventile AV der ABS-Druckregelvorrichtung VBL erfolgen soll, wird dies über Ventil AVMUX erledigt. Mit einem derartigen System ist allerdings kein Vorfüllen VF und auch kein Multiplexbetrieb (MUX) wie auch kein Druckabbau wie mit einem Doppelhubkolben DHK mit Ventil AS möglich.

Fig. 3 zeigt ein System mit zusätzlichen Funktionen und Ventilalternativen. Das Saugventil SV5 kann vermieden werden durch ein 3/2-V_{DK}-Ventil. Im stromlos offenen Zustand des Doppelhubkolbens DHK und Druckstangenkolben DK ist der Rücklauf geschlossen. In der Rückfalleben RFE ist im geschalteten Zustand die Verbindung von Doppelhubkolben DHK und Druckstangenkolben DK getrennt und der zum Vorratsbehälter R offen.

Die Ventilanordnung des Doppelhubkolbens DHK mit Ventilen AS und V_{F} ist aus der DE 10 2014 107 112.3 der Anmelderin bekannt, es fehlen hier die Ventile TV. Das Ventil AS erlaubt hier einen Druckabbau bei offenen Ventilen EA ohne Öffnung der Bremskreise BK durch Ventil AV. Das Ventil ESV ist geschlossen und nur in der Rückfallebene 3 mit Bordnetzausfall offen. Das Ventil V_{F} ist zum schnellen Vorfüllen notwendig, was besonders wirksam ist bei einem Druckstangenkolben DK nach Fig. 2.

Alle gezeigten Systeme haben gemeinsam, dass auf den Druckstangen-kolben DK zur Druckerzeugung sowohl der Pedalwegstößel 3 als auch der Doppelhubkolben DHK mit Volumenförderung und entsprechendem Druck wirken kann. Durch entsprechende Ventilschaltungen sind folgende Betriebsmodi (BM) möglich:
1. Die Druckquelle bzw. Hochdruckpumpe oder der Doppelhubkolben (Pvor) wirkt auf die Rückseite des Druckstangenkolbens DK, die Ventile EA sind geschlossen sowohl beim Vorhub wie ggf. auch beim Rückhub, der Pedalstößel 3 hat keinen Kontakt mit dem Druckstangenkolben DK;
2. Die Druckquelle bzw. Hochdruckpumpe oder der Doppelhubkolben (Pᵥₒᵣ) wirkt auf den Druckstangenkolben und über Ventil EA direkt in die Bremskreise BK, wobei z.B. im ABS-Modus der Pedalstößel 3 in Kontakt mit dem Druckstangenkolben DK ist);
3. Der Pedalstößel 3 wirkt in der Rückfallebene direkt auf den Druckstangenkolben (gilt für System nach Fig. 1)(die Betriebsmodi 1-3 gelten für ein System gem. Fig. 1, 2 und 3);
4. Vorfüllen der Bremskreise BK oder erste Phase der Kolbenbetätigung bei System nach Fig. 2, Ventil EADK ist kurzzeitig geöffnet, der Schwimmkolben SK bewegt sich mit dem Druckstangen-kolben DK infolge der Koppelung bis beide den Kolben zugeordnete Schnüffellöcher geschlossen sind durch entsprechende Steuerung des Hubes des Doppelhubkolbens oder Volumen und/oder Druckmessung im dem Kolben DK zugeordneten Bremskreis. DHK wirkt in Druckstangenkolben DK, der Pedalstößel 3 ist nicht in Kontakt mit dem Druckstangenkolben DK;
5. Die Druckquelle bzw. der Doppelhubkolben DHK wirkt über Ventil EA in die Bremskreise; Ventil VDK ist geschlossen, z.B. bei höchster Pedalkraft zusammen mit Pedalstößel 3;
6. Das Einspeisen von Volumen aus dem Hilfskolben wirkt in der Rückfallebene RFE 2 (Ausfall Motor) und 2a (Ausfall Motor bei low µ mit anschließendem positiven µ-Sprung) über Ventil EA in die Bremskreise BK; Ventil VDK ist geschlossen, Ventil ESV ist offen, der Pedalstößel 3 ist bei Leerweg LW erst nach diesem Leerweg in Kontakt mit dem Druckstangenkolben (gilt für Systeme nach Fig. 2 und 3);
7. Die Druckquelle bzw. der Doppelhubkolben DHK wirkt über Ventil VDK zusammen mit dem Pedalstößel auf den Druckstangenkolben. Das Ventil VDK steuert die Bremskraftverstärkung gegebenenfalls über KWS. Diese Anordnung ist als sog. Folge-Verstärker wirksam bei Ausfall des Wegsimulators WS;
8. Der Pedalstößel wirkt in der Rückfallebene mit und ohne Einspeisen zur Druckerzeugung auf den Druckstangenkolben.

Die Systeme nach Fig. 1, 2 und 3 haben u.a. folgende gemeinsame Vorteile:
- Bei Normalbremsung (ohne Berücksichtigung von ABS) > 90 % sind die SK- und DK-Dichtungen mit dem direkt wirkenden Bremsdruck belastet, d.h. hier können keine "schlafenden Fehler" entstehen (Ausnahme DK-Dichtung bei Fig. 2; der Verschleiß der Dichtung ist jedoch gering durch fehlende Belastung durch Druck und Schnüffelloch)
   Bei anderen Systemen wirkt auf den THZ nur der geringe Druck des Wegsimulators WS und birgt schlafende Fehler, wenn in der Rückfallebene eine wesentlich höhere Druckbelastung wirkt (ca. Faktor 2 bis 3). Noch extremer wirkt das, wenn die beschriebenen hohen Pedalkräfte auftreten.
- ABS bewirkt eine kleine Pedalrückwirkung
- Verkürzung der Baulänge durch parallele Anordnung von Motor und THZ
- Der Wegsimulator WS mit dem Hilfskolben hat eine hohe Fehlersicherheit
- Bei jedem Druckaufbau wird die Dichtheit der EA-Ventile getestet, was schlafende Fehler vermeidet
- Bei Ausfall von Dichtungen erfolgt kein Ausfall des Bremskraftverstärkers BKV, ein wichtiger Fakt für den Normalfahrer, der trotz kleinerem HZ-Kolben bei Wegsimulator-Systemen bei Ausfall des Bremskraftverstärkers BKV Faktor > 4 höhere Pedalkräfte für dieselbe Abbremsung braucht
- Mit geringem Mehraufwand von einem V_{F}-Ventil ist durch V_{F} ein schnellerer Druckaufbau P_{auf} möglich, was Bremswegverkürzung zur Folge hat
- Da Trennventile TV nicht vorhanden sind bzw. entfallen wird das System einfacher und sicherer mit einigen Folgeeffekten wie beschrieben

Hierbei ist der Aufwand vergleichsweise gering zu konkurrierenden Systemen.

Nachfolgend sind die in den Figuren 4 bis 6 dargestellten Ausführungsformen beschrieben. Bei den Ausführungsformen gem. Fig.4 und 5vsind Trennventile TV in den Leitungen vom THZ zum Ventilblock VBL angeordnet. Ferner sind Ventile AS, VF und VDK vorgesehen.

Fig. 4 zeigt die P-Bauform, bei der in der ersten Achse eine Kolben-Zylinder-Einheit mit einem Kolben 16 (Hilfskolben), eine weitere Kolben-Zylinder-Einheit (THZ) mit DK-Kolben 12a und SK-Kolben 12 liegen und in der zweiten Achse, die bezüglich der ersten Achse seitlich bzw. radial versetzt ist, eine Kolben-Zylinder-Einheit mit einem Doppelhubkolben (DHK), ein Kugel-Gewinde-Getriebe (KGT), mit Spindel 5 und ein Antriebsmotor 8 liegen. Von Arbeitskammern der weiteren Kolben-Zylinder-Einheit (THZ) sind hydraulische Leitungen, in die den Bremskreisen zugeordneten Magnetventile TV geschaltet sind, über einen Ventilblock (VBL) mit (nicht dargestellten) Radbremsen verbunden. Von Arbeitskammern der Kolben-Zylinder-Einheit mit Doppelhubkolben verlaufen hydraulische Leitungen, in die den Bremskreisen zugeordnete Magnetventile EA angeordnet sind, ebenfalls über den Ventilblock VBL zu den Radbremsen.

Von den Arbeitskammern 10a und 10c des Doppelhubkolbens verlaufen ferner hydraulische Leitungen, in die Rückschlagventile S1 und S2 geschaltet sind, zum Vorratsbehälter VB.

Ein Wegsimulator WS mit Kolben, Rückschlagventilen RVO, RV1, Blende D und Magnetventilen ESV, WA ist über eine hydraulische Leitung mit Blende D bzw. Rückschlagventil RVO mit einer Arbeitskammer der Kolben-Zylinder-Einheit mit Hilfskolben verbunden und entspricht dem in den Patentanmeldungen DE 10 2013 111 974.3 und DE 10 2014 102 536.9 der Anmelderin, auf die diesbezüglich Bezug genommen wird, beschriebenen Wegsimulator. Ein Überdruckventil ÜV hat hier zwei Funktionen: in der Normalfunktion bei hoher Pedalgeschwindigkeit die Drosselkraft zu reduzieren und ebenfalls in der Rückfallebene RFE, damit der Fahrer die Pedalkraft schneller in Druck umsetzen kann. Der Wegsimulator WS kann zweckmäßig parallel zum THZ oder auch im Ventilblock VBL angeordnet sein.

Bei der Normalfunktion werden bei Pedalbetätigung der Hilfskolben 16, ein Kraft-Weg-Simulator KWS (vgl. DE 10 2010 045 617.9 der Anmelderin) und Pedalwegsensoren 2a, 2b aktiviert. Diese steuern den Motor 8 an, der über die Spindel 5 mit KGT 7 über den Kolbenstößel 4 den Doppelhubkolben (DHK3) 10 mit drei oder (DHK2) mit zwei Kolben bzw. wirksamen Kolbenflächen antreibt.

Die Volumenförderung in den Bremskreis übernimmt bei der S-Bauform und der P-Bauform der Doppelhubkolben DHK. Das Fördervolumen wird bestimmt durch die effektive Kolbenfläche und den Kolbenhub. Bei der S-Bauform erfolgt die Förderung beim Vorhub direkt in den Bremskreis und bei der P-Bauform über die EA-Ventile in den Bremskreis. Beim Rückhub erfolgt sowohl bei S-Bauform als auch bei P-Bauform die Förderung über die EA-Ventile. Erfolgt die sog. Vorfüllung VF, so wird durch Ventilschaltungen die effektive Kolbenfläche größer. Entsprechend den verschiedenen Anforderungen für S-Bauform und P-Bauform ist der Doppelhubkolben DHK mit drei (DHK3) und bzw. zwei (DHK2) wirksamen Kolbenflächen ausgebildet.

Für die Anwendung bei der S-Bauform muss der Doppelhubkolben DHK beim Vorhub das Volumen in den Bremskreis zum Druckaufbau fördern und ebenfalls beim Rückhub. Da hier der Kolben mit der Dichtung D1 und D3 Volumen aus dem Bremskreis entnimmt, muss die Ringfläche entsprechend bemessen sein. Weiterhin soll beim Vorfüllen die effektive Kolbenfläche vergrößert werden. Das Volumen aus der Ringfläche wird hierbei unter der einseitig wirkenden Dichtmanschette hindurch gepresst, mit dem Vorteil, dass dies bereits im Bereich des Schnüffellochs geschieht und damit die Manschette entlastet. Außerdem ist eine Kolbenbewegung mit Unterdruckerzeugung im Bremssattel zur Einstellung des Belaglüftspiels erwünscht, um das Restreibmoment und damit CO2 zu reduzieren. Dabei muss die Dichtung D1 unterdruckfest sein. Daraus resultiert ein Doppelhubkolben DHK3 mit drei wirksamen Flächen. Dieser kann auch bei einer P-Anordnung eingesetzt werden (z.B. gem. Fig.4).

Man kann eine Kolbenfläche reduzieren beim Doppelhubkolben DHK2 mit Verzicht auf Unterdruckförderung. Weiterhin kann beim Doppelhubkolben DHK, wie er in Fig. 5a dargestellt und weiter unten beschrieben ist, auf das Absperrventil verzichtet werden. Allerdings muss hier der Druckabbau aus dem Bremskreis BK entweder über die ABS-Ventile AV oder ein zusätzliches Ventil AUX geschehen.

Die Volumenförderung in den Bremskreis korreliert mit der Volumenaufnahme als Funktion des Druckes für die einzelnen Radkreise oder des gesamten Bremssystems. Man spricht von der p-v-Kennlinie. Daher kann die Korrelation für die Diagnose des Bremskreises (Erfüllungszustand, Leck, BK-Ausfall) verwendet werden. Aber auch zur genannten Drucksteuerung für den Druckaufbau P_{auf} als auch den Druckabbau P_{ab}. Man kann hierbei ein "Teil-Multiplex" (Teil-MUX) vorsehen, wobei das Multiplexverfahren nur für den Druckaufbau oder den Druckabbau verwendet wird, wie dies in der Patentanmeldung DE 10 2005 055 751 der Anmelderin noch näher beschrieben ist, auf die diesbezüglich Bezug genommen wird.

Vorzugsweise ist der Kolbenstößel biegeelastisch ausgebildet, um bei Spindelschlag eine geringere Querkraft auf den Doppelhubkolben (DHK) 10 zu erzeugen. Die Drehmomentabstützung ist hier nicht ausgeführt und entspricht der in der DE 10 2012 103 506 der Anmelderin beschriebenen Drehmomentabstützung, auf die insoweit Bezug genommen wird. Die Funktionen des Doppelhubkolbens (DHK3) 10 mit Saugventilen S1 und S2 mit Absperrventil AS entsprechen den in der DE 10 2013 111 974 der Anmelderin beschrieben Funktionen. Wird der Doppelhubkolben (DHK) 10 über den Motorantrieb betätigt, so wird das Bremsflüssigkeitsvolumen aus dem Druckraum 10b über die Ventile EA in die Bremskreise DK und SK gefördert. Das Ventil AS bleibt offen, das Ventil VF ist offen. Um den Entlüftungszustand der Bremskreise BK zu überwachen, wird das Fördervolumen mit dem Druck in den Bremskreisen BK über Druckgeber DG überprüft. Bei Nicht-Übereinstimmung mit der Druck-Volumen-Kennlinie wird abwechselnd ein EA-Ventil geschlossen und der weitere Druckaufbau überwacht. Bei festgestelltem BK-Ausfall bleibt das entsprechende Ventil EA geschlossen. Gleichzeitig mit der Motorbetätigung werden die Trennventile TV geschlossen.

Ist nach Ende des Vorhubes des Doppelhubkolbens 10 DHK das gewünschte Druckniveau noch nicht erreicht, so erfolgt wie in der Anmeldung DE 10 2013 111 974.3 der Anmelderin beschrieben, der Rückhub, bei dem das Ventil AS geschlossen und das Ventil VF offen ist. Ist die in der Anmeldung DE 10 2013 111 974.3 beanspruchte VF-Funktion gefordert, so ist beim Vorhub das Ventil AS und das Ventil VF geschlossen. Wird nun die ABS-Funktion gefordert, so erfolgt z. B. die Druckregelung nach dem Stand der Technik mit Einlassventilen EV und Auslassventilen AV zum Druckabbau (siehe Ventilblock VB). Hierbei gelangt das Volumen für den Druckabbau über Rücklaufleitungen R zum Vorratsbehälter VB. Zur Reduzierung der Druckdifferenz am Ventil EV ist es möglich, die Druckdifferenz am EV z. B. nur 20 % über dem Blockierdruck des sog. high Rades einzusteuern. Durch den geringeren Differenzdruck kann bei gleichem max. Druckgradient der Ventilquerschnitt größer gewählt werden, damit beim schnellen Anbremsen der Staudruck geringer und das sog. Time-to-lock kleiner wird.

Alternativ kann anstelle von vier Einlassventilen EV und vier Auslassventilen AV die MUX Drucksteuerung mit vier Schaltventilen SV eingesetzt werden. Einer der vielen Vorteile ist eine genaue Drucksteuerung, indem der Kolben (DHK) entsprechendes Volumen in den Radkreis einsteuert. Auch dieses Verfahren kann hier bei Druckaufbau P_{auf} über Ventil EV eingesetzt werden.

Bei Betätigung um Bewegung des Bremspedals 12 werden die redundanten Pedalwegsensoren 2a und 2b betätigt in einer von dem OEM zu definierenden Funktion, die den Motor 8 und damit den Druckaufbau und den Bremskraftverstärker (BKV) bestimmen. Zwischen Pedalstößel 3 und DK-Kolben ist ein kleiner Leerweg LW eingebaut, damit die Pedalanfangskraft klein ist. Diese wird bestimmt durch die Rückstellkräfte der Federn, Reibungen in den Führungen, Pedalwegsensoren und im Wesentlichen durch die Reibung der Dichtungen, die druckabhängig sind. Diese Gesamtreibung, welche auf das Pedal wirkt, ist konzeptionell sehr unterschiedlich. Beim S-System gemäß der DE 10 2010 045 617.9 der Anmelderin wirken im Wesentlichen nur zwei Dichtungen und die Rückstellfeder, die HZ-Kolben mit Federn erst in der Rückfallebene RFE, da durch das Stellsignal der Pedalwegsensoren im Bremskraftverstärker (BKV)-Betrieb die HZ-Kolben vom Pedalstößel weg bewegt werden. Bei anderen Systemen, z. B. DE 10 2012 205 962, wirken vier Dichtungen. In der gezeigten Fig. 4 gibt es zwei Möglichkeiten der Ansteuerung a. und b.
a.Nach Durchlaufen des Leerweges LW trifft der Pedalstößel 3 auf den Kolben 12a und wirkt dann weiter auf die HZ-Rückstellfeder 23a und zusätzlich vier Dichtungen, da die Feder 23 vorgespannt ist. Dies bedeutet insgesamt sechs Dichtungen. Mit dem Motoranlauf werden die Ventile TVDK und TVSK geschlossen und ein HLF-Ventil zum Rücklauf R zum Vorratsbehälter VB geöffnet, damit keine zusätzliche Druckkraft auf den Kolben 12a und Pedalstößel 3 wirkt. Die Kraft-Weg-Charakteristik bestimmt neben der genannten Reibung nur der Wegsimulator WS, der auch adaptiv sein kann wie in der DE 10 2014 102 536.9 der Anmelderin beschrieben.
b. Über das geöffnete VDK-Ventil gelangt beim Vorhub des Doppelhubkolbens 10 entsprechend der Motorsteuerung Bremsflüssigkeitsvolumen aus dem Druckraum 10b (auch aus dem Druckraum 10a über geöffnete Ventile AS und VF) in einen von der Rückseite des DK-Kolbens 12a begrenzten Druckraum 12c, somit wirkt dieser wie die vorgenannte S-Bauform gemäß DE 10 2010 045 617.9 der Anmelderin, da bei offenem Ventil AS nur das Volumen des vorderen Kolbens zur Volumenförderung beiträgt, wie dies auch in den Patentanmeldungen DE 10 2013 111 974.3 und DE 10 2014 102 536.9 der Anmelderin beschrieben ist, auf die diesbezüglich hier Bezug genommen wird. Somit wirkt hier auf die Pedalanfangskraft nur die Reibungskraft von zwei Dichtungen, wobei die Druckkomponente des kleinen Pedalstößeldurchmessers mit < 15 % vernachlässigt werden kann. In dieser Phase sind zunächst beide Ventile TV offen, vorteilhaft wird das TVSK nach dem Überfahren des Schnüffellochs 12b des Kolbens 12a geschlossen. Dies kann indirekt über die Bewegung des DHK-Kolbens 10 über den Motorsensor festgestellt werden. Nach Schließen von TVSK bleibt TVDK offen, das EADK ist zu, EASK ist offen, damit das Volumen des DHK nach geschlossenem TVSK in den Bremskreis SK gelangt. Damit sind beide BK annähernd auf demselben Druckniveau, welches bei höheren Drücken nicht mehr der Fall ist wegen der Dichtungsreibung im DK-Kolben 12a. Zum Druckausgleich kann hierbei das EADK geöffnet werden, somit wirkt der Druck des Doppelhubkolbens (DHK) 10 mit gleichem Druckniveau in beide Bremskreise BK. Ein möglicher Bremskreis-Ausfall wird diagnostiziert durch je einen Druckgeber DG pro Bremskreis BK und die Volumenförderung des Doppelhubkolbens DHK, welche mit der Druckvolumenkennlinie des Bremskreises BK korrelieren muss. Ist dies nicht der Fall, so wird die Volumenzufuhr über das jeweilige Ventil EA abgeschaltet. Soll Vorfüllen für einen Ausgleich des Belaglüftspiels oder einen schnellen Druckanstieg erfolgen, so werden die Ventile AS und VF geschlossen, so dass eine große effektive Kolbenfläche des Doppelhubkolbens DHK 10 voll zur Wirksamkeit kommt. Dabei wirkt beim Doppelhubkolben DHK3 eine große Kolbenfläche bestehend aus dem vorderen Kolben (Druckraum 10b) und dem Ringkolben (Druckraum 10a), was über den Kolbenweg eine größere (z. B. um den Faktor 3) Fördermenge ergibt, als nur mit dem vorderen Kolben bzw. dessen Wirkfläche. Beim Doppelhubkolben DHK2 wirkt der Kolben mit der Dichtung D2. Beim Vorfüllen wird ein Druckausgleich auf die Hinterseite des Kolbens verhindert durch Sperren des Ventils VF gemäß Figur 5.

Die Ansteuerung nach b. hat viele Vorteile, z. B. sind die Dichtungen des HZ-Kolbens immer mit realem Druck belastet. Bei Systemen, bei denen die HZ-Kolben für den Wegsimulator WS mitgenutzt werden, wirkt hierbei nur der WS-Druck der ca. nur 30 % des Bremsdrucks im Bremskreis BK ist.

Weiterhin wird bei Erreichen des Wegsimulators (WS)-Ansteuerpunkts ca. 40 % des Pedalwegs das Ventil TVDK geschlossen zus. mit dem WA-Ventil des Wegsimulators WS, welches bereits in der Stufe 2 des Wegsimulators WS geschlossen wird. D. h. in Stufe 1 der flachen Kennlinie ist das Ventil WA offen, wobei nur die Rückstellfeder 18 und die Dichtungsreibung am Hilfskolben 16 im Wesentlichen auf die Pedalkraft wirkt. In der Stufe 2 ist das Ventil WA geschlossen, d. h. der Wegsimulatorkolben mit seiner Federcharakteristik wirkt auf das Pedal.

Bekanntlich kann der Druck im Wegsimulator WS sehr hoch werden, wenn ein kräftiger Fahrer voll auf das Pedal tritt. Hier können Drücke > 300 bar auftreten, welche Gehäuse und Dichtungen belasten. Dieser hohe Druck wird mit dem Druckgeber DG gemessen, da die hohe Pedalkraft auf den DK-Kolben wirkt, wenn z. B. bei hohem Druck > 200 bar das Ventil WA mechanisch öffnet. In diesem Fall kann das Ventil VDK geschlossen werden und das Ventil ESV geöffnet. Damit wirken sowohl die Druckkräfte von DK-Kolben 12a als auch Hilfskolben 16 auf das Bremspedal. Damit ist die Druckbelastung im Bereich von 200 bar wenn das Ventil WA öffnet. Dies kann durch eine Stromregelung des stromlos offenen Ventils gelöst werden.

Der Druckabbau im Bremskraftverstärker (BKV)-Modus erfolgt durch Rückbewegung des Doppelhubkolbens 10 DHK durch zusätzlichen Druckabbau über AV-Ventile in den Rücklauf R da das zusätzliche Volumen von VF nicht beim Rückhub des Doppelhubkolbens DHK ausgeglichen wird.

Nachfolgend sind noch die Rückfallebenen RFE zu beschreiben.

RFE1 bei Ausfall des Wegsimulators WS z. B. Undichtheit. In diesem Fall fehlt die Gegenkraft, da kein Druck im Wegsimulator WS entsteht. Dies wird bekanntlich durch den Kraft-Weg-Simulator KWS erkannt wie er in der DE 10 2014 102 536 der Anmelderin beschrieben ist, auf die hiermit Bezug genommen wird, wenn der progressive Kraftanstieg des Wegsimulators WS in Stufe 2 nach einem bestimmten Pedalweg (s. DE 10 2014 102 536) wirkt bzw. ausfällt. In diesem Fall trifft der Pedalstößel 3 auf den DK-Kolben 12, was eine Kraftänderung bedeutet und vom Kraft-Weg-Simulator KWS gemessen wird. In diesem Fall erfolgt die Motoransteuerung und Volumensteuerung auf die Rückseite des DK-Kolbens 12a über das Ventil VDK in Funktion des KWS-Signals. In diesem Fall wirkt der Bremskraftverstärker BKV wie ein konventioneller Bremskraftverstärker mit Pedalkraftunterstützung als Folge-Bremskraftverstärker (Fo-BKV). Der Vorteil hierbei ist im Vergleich zur S-Bauform, dass bei Folge-Bremskraftverstärker derselbe kurze Pedalweg wirkt, allerdings mit etwas unstetiger Kennlinie.

Bei einer Optimierung der Empfindlichkeit des Kraft-Weg-Simulators KWS könnte auf den Wegsimulator WS verzichtet werden.

RFE 2 bei Motorausfall bei low µ, DK-Kolben ist am Wegsimulator-Ansteuerpunkt bei hoher Pedalkraft und anschließendem positiven µ-Sprung. Wie bereits in der DE 10 2013 111 974.3 der Anmelderin, auf die hier diesbezüglich Bezug genommen wird, dargestellt, wird hier Volumen mit Hilfskolben über offenes Ventil ESV und EADK in den Bremskreis BK von DK-Kolben eingespeist.

RFE3 bei Motor- und Bordnetzausfall. Die Ventile ESV, VDK, WA sind hier offen, die Ventile EADK, EASK geschlossen. Der Pedalstößel wirkt auf DK-Kolben 12. Die Druckerzeugung erfolgt konventionell über die Pedalkraft.

Es ist auch denkbar, die S-Bauform gemäß der DE 10 2014 102 536.9, auf die hier Bezug genommen wird, so zu gestalten, dass der Motor parallel liegt und über einen Zahnriemenantrieb, z. B. entsprechend DE 10 2011 050 587, auf das Kugel-Gewinde-Getriebe KGT wirkt.

Fig. 5 unterscheidet sich zu Fig. 2 durch Entfall von Ventil HLF, indem nur Ansteuermethode b. eingesetzt wird und ein Doppelhubkolben (DHK2) 15 mit zwei Kolben. Außerdem kann bei Verzicht auf VF dieses Ventil entfallen. In Fig. 5 ist dieses Ventil gezeichnet für die Funktion VF und ist aber im Gegensatz zu Fig. 4 zwischen dem Ventil AS und dem Doppelhubkolben 15 positioniert.

Dieser Doppelhubkolben DHK2 oder auch DHK3 gem. Fig. 4 kann auch in einer P-Bauform nach DE 10 2012 222 897 A1 eingesetzt werden.

Bei hydraulischen Systemen muss darauf geachtet werden, dass diese bei Fahrzeugstillstand druckausgeglichen sind. Dies ist bei dem System nach Fig. 4 und Fig. 5 der Fall, da alle Ventile (AS, VF, VDK, ESV, WA) zum Rücklauf und auch die Schnüffellöcher der HZ-Kolben offen sind.

Der Unterschied des Doppelhubkolbens (DHK3) gemäß Fig. 4 mit drei Kolben zum Doppelhubkolben (DHK 2) gemäß Fig. 5 liegt in zwei Vorteilen. Der Doppelhubkolben DHK3 kann in der Druckkammer 10b Unterdruck erzeugen, wenn die D1-Dichtung unterdruckfest ist. Dies ist von Vorteil bei der Lüftspieleinstellung der Bremskolben mit Unterdruck wie sie in der DE 10 2008 051 316.4 der Anmelderin beschrieben ist, auf die hier insoweit Bezug genommen wird. Der zweite Vorteil liegt in der Fehlersicherheit bei Ausfall der Dichtungen D1 - D3. Fällt eine der drei Dichtungen aus, so kann im Vorhub Druck aufgebaut werden, die BKV-Funktion bleibt erhalten. Außerdem wird der Ausfall diagnostiziert. Dies ist wichtig für das autonome Fahren / Bremsen, da bei Einfachfehler die Funktion erhalten bleiben muss.

Fig. 5a zeigt mit dem Doppelhubkolben DHK eine Vereinfachung der 2-Kolben-Version. Hier wird auf das Absperrventil AS verzichtet, indem zwei Überdruckventile V1 und V2 eingesetzt werden. Der Stößel 4 wirkt über Dichtung D3 direkt auf den Kolben. Wenn der Rückhub nicht für weitere Volumenförderung in den Bremskreis genützt wird, sondern Druckabbau bei Rücknahme des Bremspedals erfolgen soll, so kann dies durch Öffnen des ABS-AV-Ventils oder durch ein zusätzliches AVX-Ventil im Doppelhubkolben DHK-Kreis erfolgen.

In Figur 6 ist eine Fahrzeugbremse bzw. ein Betätigungssystem hierfür dargestellt, mit in Reihe hintereinander angeordneten ersten, zweiten und dritten Kolben-Zylinder-Einheiten.

Parallel dazu, d.h. mit räumlich versetzt angeordneter Mittelachse, ist im Bereich der ersten Kolben-Zylinder-Einheit (Doppelhubkolben) ein Antrieb mit Elektromotor 8 angeordnet, wobei der Antrieb von der Abtriebsspindel auf eine umlaufende Mutter und von dieser auf die Spindel 5 eines Kugel-Gewinde-Getriebes 7 mittels eines Zahnriemens erfolgt. Die übrigen Elemente des Betätigungssystems entsprechen weitgehend den in den Figuren 4 und 5 dargestellten, so dass auf eine nähere Beschreibung hier verzichtet wird. Eine parallele Anordnung des Motors mit Riementrieb kann auch bei einer in den Figuren 4 und 5 dargestellten im Übrigen P-Anordnung des Betätigungssystems vorteilhaft sein.

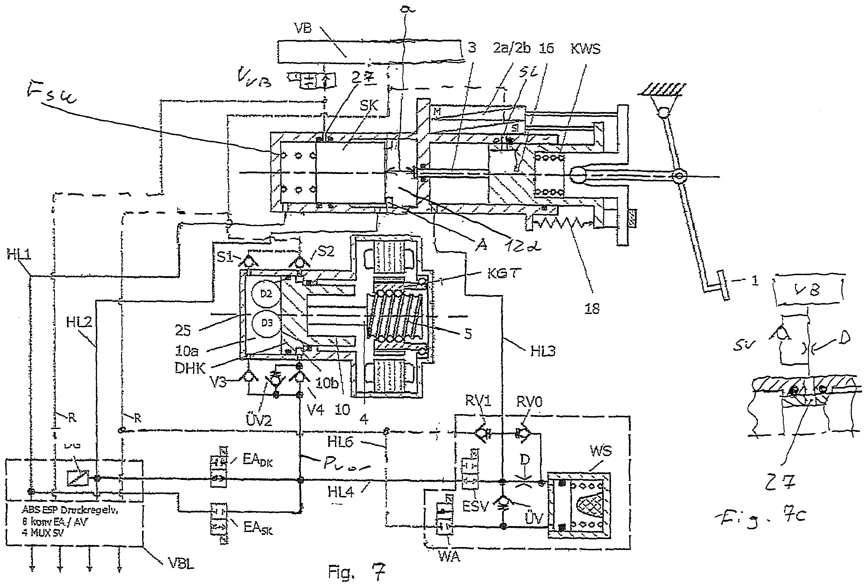

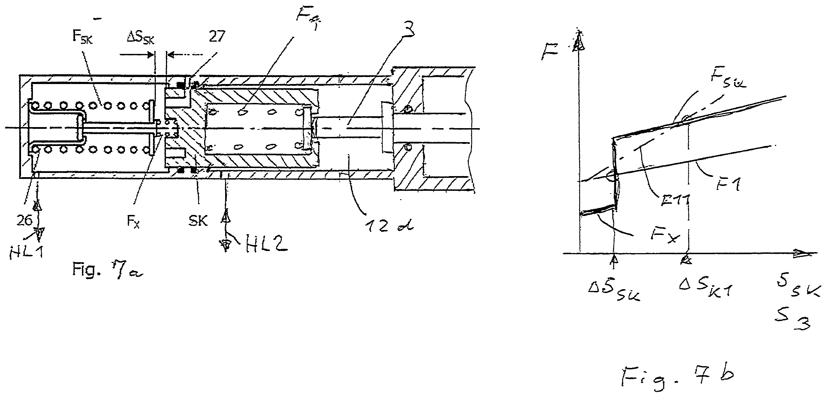

Figur 7 zeigt eine besonders einfache Ausführung der Erfindung mit erheblicher weiterer Baulängenverkürzung bei der die vom Elektromotor angetriebene (zweite) Kolben-Zylinder-Einheit DHK (Doppelhubkolben) wie in Figur 2 ausgeführt ist. Die hier parallel zur angetriebenen Kolben-Zylinder-Einheit DHK angeordnete erste Kolben-Zylinder-Einheit (Hauptzylinder) weist hier jedoch nur einen Kolben SK auf, dessen erste, mit einer Feder F_{SK} versehene Arbeitskammer über eine Leitung HL1 und über den Ventilblock VBL mit entsprechenden Radbremsen verbunden ist und einen ersten Bremskreis bildet. Mit anderen Worten ist ein weiterer Kolben DK (wie er bei der Ausführung gemäß Figur 2 vorhanden ist) hier nicht vorgesehen. Ein auf der Rückseite des Schwimmkolbens SK von der Kolben-Zylinder-Einheit (Hauptzylinder) gebildeter weiterer Arbeitsraum 12d ist über eine Leitung HL2 und den Ventilblock VBL mit entsprechenden Radbremsen verbunden und bildet einen zweiten Bremskreis. Der Arbeitsraum 12d weist zweckmäßig an passender Stelle eine (nicht gezeichnete) Entlüftung, z. B. mittels einer mechanischen Entlüftungsschraube oder einem stromlos geschlossenen Magnetventil, auf. Die erste Kolben-Zylinder-Einheit (Hauptzylinder) weist hierbei einen Anschlag A für den Kolben SK auf, gegen den der Kolben SK mittels der Kolbenfeder F_{SK} anlegbar ist. Dadurch wird ein Leerweg a zwischen dem Kolben SK und dem am Hilfskolben 16 angeordneten Pedalstößel 3 gebildet. Der Abstand bzw. Leerweg a entspricht hierbei vorzugsweise dem halben Hub des Pedalstößels 3, z. B. 36/2 mm. Er kann jedoch auch kleiner sein, wobei das Minimum dem Hub bis zum Anschlag des Wegsimulators WS entspricht. In den Leitungen zu den Hydraulikleitungen bzw. Bremskreisen HL1 bzw. HL2 ist bzgl. Bremskreis HL1 ein stromlos geschlossenes Ventil EA_{SK} und bzgl. Bremskreis HL2 ein stromlos offenes Ventil EA_{DK} eingesetzt. Da im Übrigen die Ausführung gemäß Figur 7 weitestgehend der der Figur 2, entspricht, wird ergänzend auch darauf Bezug genommen, so dass hier auf eine nähere Beschreibung verzichtet wird und nur die Unterschiede bezüglich Ausführung und Funktion beschrieben sind.

Eine dritte Kolben-Zylinder-Einheit (Hilfskolben) ist in Reihe mit der ersten Kolben-Zylinder-Einheit (Hauptzylinder) angeordnet und weist einen am Hilfskolben 16 angeordneten Stößel (Pedalstößel 3) auf, dessen Ende auf den Kolben SK wirken kann.

Die Arbeitskammer der Kolben-Zylinder-Einheit (Hilfskolben) ist über eine hydraulische Leitung HL3, eine Wegsimulatoreinrichtung und eine hydraulische Leitung HL4 mit den Bremskreisen und der zweiten Kolben-Zylinder-Einheit DHK verbunden.

Die Wegsimulatoreinrichtung entspricht weitgehend der in Figur 2 dargestellten, wobei jedoch bei der Ausführung gem. Figur 7 ein stromlos geschlossenes Ventil WA eingesetzt ist.

Bei einer Betätigung des Doppelhubkolbens DHK wird hier aus der Arbeitskammer 10a über Ventil EA Hydraulikflüssigkeit direkt in den zugeordneten Bremskreis gefördert bzw. der Druck entsprechend erhöht.

In der Rückfallebene RFE kann mittels des Hilfskolbens 16 aus dessen Arbeitskammer über die Leitung HL3, HL4 und das stromlos offene Ventil ESV Hydraulikflüssigkeit in die Bremskreise gefördert bzw. der Druck entsprechend erhöht werden, wobei das Ventil WA stromlos geschlossen ist. Mit anderen Worten übernimmt dabei der Hilfskolben 16 die Funktion des Kolbens DK bei der Ausführung gem. Figur 2. Das Hydraulikflüssigkeitsvolumen aus der Arbeitskammer des Hilfskolbens 16 gelangt dabei über das stromlos offene Ventil EA_{DK} und das stromlos offene Ventil ESV in die Leitung HL2 bzw. in den entsprechenden Bremskreis.

Bei der Ausführung gemäß Fig. 1 bzw. 1a ist eine 2-stufige Feder am Schwimmkolben SK vorgesehen. Eine entsprechende Feder kann auch bei der Ausführung gem. Figur 7 vorgesehen werden und ist vergrößert in Figur 7a dargestellt. Die Federkraft F_{SK} dieser Feder braucht nicht stark progressiv sein, da ein Druckstangenkolben DK und somit auch in dieser einfachsten Ausführung eine Feder für diesen hier nicht vorhanden ist. Die bei der Ausführung gemäß Fig. 1 am Druckstangenkolben vorgesehene Feder ist hier nicht notwendig bzw. kann durch eine kombinierte Federanordnung ersetzt werden, die sich am Pedalstößel 3 abstützt, wie in Figur 7a gezeigt.

Alternativ kann an der dritten Kolben-Zylinder-Einheit (Hilfskolben 16) ein Schnüffelloch SL vorgesehen sein. Dadurch ergibt sich vorteilhaft ein Druckausgleich zwischen dem Doppelhubkolben DHK und dem Hilfskolben 16 und außerdem eine sichere Entlüftung des Hilfskolbens. Es kann auch auf einen Druckausgleich über das Schnüffelloch SL verzichtet werden. Dabei wird die Volumenausdehnung vom Wegsimulator WS aufgenommen und kann, z. B. beim Fahrzeugstart, durch kurzzeitige Öffnung des Ventils EA_{SK} oder des Ventils AV über den Rücklauf zum Vorratsbehälter ausgeglichen werden. Auch kann ein Volumenausgleich erfolgen, indem das Ventil RV1 mit einer Drossel kombiniert wird, die einen kleinen Leckfluss zulässt, da die zeitliche Änderung bei Temperaturerhöhung klein ist.

Da der Kolben DK bei der Ausführung gem. Fig. 7 fehlt, ist die Zufuhr eines zusätzlichen Volumens durch Parallelschaltung von Hilfskolben und Kolben DK bei der Ausführung gemäß Fig. 7 nicht möglich. Alle anderen Funktionen der anderen in den Figuren 1 bis 6 dargestellten Ausführungsformen sind jedoch auch mit der Ausführung gemäß Figur 7 möglich, insbesondere: Folge-Bremskraftverstärkung, Reduzierung des Druckniveaus im Hilfskolbenkreis durch Absenkung des Druckniveaus im Bremskreis HL2 und volles Druckniveau im Bremskreis des Schwimmkolbens SK, Diagnose, Vorfüllen, adaptive Wegsimulation, kein Ausfall der Bremskraftverstärkung bei Ausfall der Bremskreise HL1 und HL2 durch Diagnose des Bremskreisausfalls und Sperren des Ventils EA.

Bei der Ausführung gem. Figur 7 erfolgt der Druckaufbau beim Anbremsen aus dem Arbeitsraum 10a der zweiten Kolben-Zylinder-Einheit (Doppelhubkolben DHK) über das Ventil EA_{DK} in den Bremskreis HL2 und über den Arbeitsraum des Kolbens SK der ersten Kolben-Zylinder-Einheit (Hauptzylinder) in den Bremskreis HL1. Das Ventil ESV ist hierbei geschlossen und das Ventil WA ist geöffnet, abhängig vom Arbeitsbereich des Wegsimulators WS. In der Stufe 1 des Wegsimulators WS ist das Ventil WA offen, wobei nur die Rückstellfeder 18 des Hilfskolbens 16 die Pedalkraft bestimmt.

Im ABS-Modus ist das Ventil ESV geschlossen und das Ventil WA ggf. ebenfalls geschlossen, abhängig vom Arbeitsbereich des Wegsimulators WS. Den Bremskreisen HL1 und H12 wird aus dem Arbeitsraum 10a des Doppelhubkolbens DHK Druckmittel zugeführt, so dass infolge der offenen Ventile EA am Kolben SK ein Druckausgleich vorliegt. Die Positionen des Kolbens SK werden durch die Feder F_{SK} und F1 bestimmt, wie in Figur 7a und 7b dargestellt und diesbezüglich beschrieben.

In der Rückfallebene 1 (Ausfall der Wegsimulatoreinrichtung) wirkt das System als Folge-Bremskraftverstärker. Nach Durchlaufen des Pedalweges a findet ein Auftreffen des Pedalstößels 3 auf den Schwimmkolben SK statt. In diesem Bereich ist der Pedalkraftanstieg relativ flach. In diesem Bereich findet aber bereits ein Vorfüllen über das Ventil ÜV2 statt, damit nach Auftreffen des Pedalstößels 3 auf den Kolben SK ein kleinerer Pedalweg für die Drucksteigerung notwendig ist. Nachdem der Pedalstößel 3 auf den Kolben SK auftrifft, wird der Vordruck vom Doppelhubkolben DHK über das Ventil EA_{DK} mittels des am Hilfskolben 16 vorgesehenen Kraft-Weg-Simulators KWS so gesteuert, dass eine gewünschte Pedalkraft bzw. ein gewünschter Bremsdruck in den Bremskreisen HL1 und HL2 entsteht.

In der Rückfallebene 2/2a wirkt das aus dem Arbeitsraum des Hilfskolbens 16 verdrängte Volumen über Ventile ESV und EA in den Bremskreisen HL1 und HL2, wobei sich ein unsymmetrischer Druckaufbau ergeben kann, abhängig von der Position des Kolbens SK. Dieser kann durch einen Druckausgleich über offene Ventile EA vermieden werden. Hier kann der Kolben SK in der Anfangs- oder Endposition sein und das Auftreffen des Pedalstößels 3 auf den Kolben SK verursacht anschließend ein unsymmetrisches Druckniveau in den Bremskreisen HL1 und HL2.

In der Rückfallebene 3 wirkt das Volumen aus dem Arbeitsraum des Hilfskolbens 16 voll auf den Bremskreis HL2 und das Volumen aus dem Arbeitsraum des Schwimmkolbens entsprechend auf den Bremskreis HL1. Hierbei wirkt der Hilfskolben 16 wie ein Druckstangenkolben DK (z. B. der Ausführung gem. Figur 2). Das eingespeiste Volumen des Hilfskolbens 16 wird um das Aufnahmevolumen des Wegsimulators WS reduziert (ca. 20%). Dies kann bei Bedarf vermieden werden durch ein nicht gezeichnetes Absperrventil zum Wegsimulator WS. Durch entsprechende Dimensionierung des Hilfskolbens 16 kann das Fördervolumen in der Rückfallebene RFE vergrößert werden mit einer entsprechenden Dimensionierung des Wegsimulatorkolbens und der Wegsimulatorfedern.

Durch Verwendung einer erweiterten Ventilfunktion wie nach Figur 3 mit Ventilen AS und VF und AV_{MUX} können auch hier die verschiedenen beschriebenen Zusatzfunktionen wie definierter Vor- und Rückhub, Druckabbau in Doppelhubkolben DHK, Vorfüllen und Multiplex (MUX) mit relativ geringem Mehraufwand ausgeführt werden. Auch ist es möglich den Doppelhubkolben mit drei Kolben (bzw. drei wirksamen Kolbenflächen) gemäß Figur 4 einzusetzen, um z. B. gezielt Unterdruck zur Steuerung des Belaglüftspiels zu erzielen.
Bei diesem System wirkt der Doppelhubkolben DHK zur Druckerzeugung (und Modulation bei Multiplexverfahren MUX) in die Bremskreise. Der Hilfskolben 16 wirkt zusammen mit dem Wegsimulatorkolben als Wegsimulator und bestimmt die Pedalcharakteristik. Bei Ausfall des Doppelhubkolbens DHK oder des Motors (Rückfallebene) wirkt der Hilfskolben 16 ersatzweise wie ein Druckstangenkolben DK und führt einem Bremskreis direkt oder über den Kolben SK, in dem das Volumen bzw. der Druck des Hilfskolbens 16 auf die Sekundärseite des Kolbens SK wirkt, beiden Bremskreisen Druckmittel zu. Aufgrund dieser Doppelfunktion des Hilfskolbens 16 ergibt sich nicht nur eine Kostenreduzierung sondern auch eine weiter vereinfachte Realisierung der vielen erfindungsgemäßen Funktionen.

Ein Druckabbau aus den Bremskreisen HL1 und HL2 erfolgt in einer ersten Stufe (bis Wegsimulatorstufe 1) über das Ventil ESV und WA in den Vorratsbehälter VB und ab der zweiten Stufe (Wegsimulatorstufe 2) über die Ventile EA und AV vom Bremskreis HL2 in den Vorratsbehälter VB.

Figur 7a zeigt im vergrößerten Detail den Kolben SK mit dem Pedalstößel 3. Der Kolben SK ist in seiner Ausgangsstellung mit Federn fixiert. Damit sollerreicht werden, dass bei Betätigung des Pedalstößels 3 der Kolben SK über das Schnüffelloch 27 bewegt wird, damit bei dieser Position sowohl in den Bremskreis HL1 als auch HL2 Druck eingespeist werden kann. Dies wird dadurch erreicht, dass die Federkraft F1 als Fx; siehe hierzu auch Figur 7b. Nach einem Hub von ΔSₛₖ, bei dem das Schnüffelventil 27 sicher geschlossen ist, wirkt dann die vorgespannte Feder F_{SK}. Erfolgt nun eine Volumen- bzw. Druckeinspeisung vom Doppelhubkolben DHK in den Druckraum 12d, so bewegt sich der Kolben SK entsprechend. Soll nun der Kolben SK zwecks ausreichendem Volumen in der Rückfallebene in die Ausgangsstellung ΔSₛₖ zurückgefahren werden, so erfolgt dies bei gleichem Druck auf beiden Seiten des Kolbens SK durch die höhere Federkraft der Feder F_{SK}. Durch progressive Auslegung der Feder z.B. gemäß der Kennlinie F11 in Figur 7b kann diese Position auf einen anderen Wert ΔSₛₖ geändert werden.

Figur 7c zeigt eine Alternative zum Ventil V_{VB} in der Verbindung vom Schnüffelloch 27 des Kolbens SK zum Vorratsbehälter VB. Dieses Ventil ist notwendig, damit bei dem seltenen Ausfall der Sekundärmanschette des Kolbens SK nicht zusätzlich die Druckversorgung vom Doppelhubkolben DHK ausfällt. In diesem Fall würde der Doppelhubkolben DHK Volumen in den Raum 12a fördern, ohne Druckanstieg bei großem Leck. Dieser Fall wird von der Diagnose durch Vergleich des Fördervolumens mit dem Druck erkannt, was zum Schließen des Ventils V_{VB} führt. Dies kann mit geringem Aufwand gemäß Figur 7c gelöst werden, indem in die Verbindungsleitung eine Drossel D und ein Saugventil eingesetzt werden. Der Querschnitt der Drossel D ist sehr klein, da sie nur zum Volumenausgleich bei ansteigender Temperatur genutzt wird, damit das Volumen aus dem Bremskreis HL1 in den Vorratsbehälter VB abströmen kann. Durch die Drossel ist die Volumenförderung des Doppelhubkolbens DHK wesentlich größer als das Leckvolumen, so dass genügend Druck entsteht. Das Saufventil SV wird zum Entlüften des Bremskreise HL1 genutzt. Das Ventil EA_{DK} hat die Aufgabe bei einem Leck im Bremskreis HL2 zwischen Raum 12d und dem Ventilblock VBL oder im Doppelhubkolben DHK den Bremskreis HL2 durch Schließung von EA abzutrennen. Da dies konstruktiv auszuschließen ist kann auch das Ventil EA_{DK} eingespart werden. Auch kann der Drucksensor DG durch die Messung des Motorstromes, der sich annähernd proportional zum Druck verhält, ersetzt werden. Das Ventil EASK ist notwendig zum Druckgleichgewicht zwischen den Bremskreisen HL1 und HL2 zur beschriebenen Kolbenpositionierung des Kolbens SK und zum anderen um bei Undichtheit im gesamten Bremskreis HL1 diesen abzutrennen.

Bei diesen Vereinfachungen kommt der sicheren Diagnose eine große Bedeutung zu, um Undichtigkeiten rechtzeitig sicher zu erkennen. Dies geschieht im Wesentlichen durch Vergleich des Fördervolumens des Doppelhubkolbens DHK mit dem erreichten Druckniveau, das direkt mittel Druckgeber DG oder indirekt mittels Motorstrommessung festgestellt wird. Das Volumen und der Druck werden hierbei mit der fahrzeugspezifischen Druck-Volumen-Kennlinie verglichen. Das kann in jedem Betriebsmodus mit entsprechender Plausibilität, d.h. Vergleich mit einem oder zwei Bremskreisen erfolgen. Bei Unplausibilität oder Undichtheit erfolgt eine entsprechende Schaltung von Ventil oder Motor, meistens eine Abtrennung eines Bremskreises. Die entsprechenden Bremskreise werden dann nicht mehr aus der Kolben-Zylinder-Einheit (Doppelhubkolben) versorgt. Das Volumen des Doppelhubkolbens wird z.B. über den Motor bzw. den Drehwinkel des Rotors gemessen, der die Spindel 5 und damit den Doppelhubkolben DHK antreibt.

### Bezugszeichenliste

- 1: Bremspedal
- 2a: Pedalwegsensoren Master
- 2b: Pedalwegsensoren Slave
- 3: Pedalstößel
- 4: Kolbenstößel
- 5: Spindel
- 6: Motorsensor
- 7: KGT
- 8: EC-Motor
- 9: Lagerung
- 10: Doppelhubkolben (DHK3)
- 10a: Arbeitskammer (Ringraum) bzw. Druckkammer
- 10b: Arbeitskammer bzw. Druckkammer
- 10c: Arbeitskammer bzw. Druckkammer
- 11: Vorratsbehälter
- 12: SK-Kolben
- 12a: DK-Kolben
- 12b: Schnüffelloch DK
- 12c: Arbeits bzw. Druckkammer
- 15: Doppelhubkolben (DHK2)
- 16: Hilfskolben
- 18: Pedalrückstellfeder
- 23: HZ-Rückstellfeder
- 23a: HZ-Rückstellfeder
- 24: Absperrventil
- 25: DHK-Gehäuse
- 26: Federgehäuse
- 27: Schnüffelloch

- A: Anschlag
- D: Blende zur Drosselung
- S1: Saugventil 1
- S2: Saugventil 2
- S5: Saugventil 5
- V3: Überdruckventil
- V4: Überdruckventil
- V_{VB}: Magnetventil
- R: Rücklauf zum Vorratsbehälter VB
- RV0: Rückschlagventil 0
- RV1: Rückschlagventil 1
- WS: Wegsimulator
- WA: Magnetventil
- ÜV: Überdruckventil
- ÜV2: Überdruckventil zum Vorfüllen
- HiKo: Hilfskolben
- HL1: hydraulische Leitung bzw. Bremskreis
- HL2: hydraulische Leitung bzw. Bremskreis
- LW: Leerweg
- RFE: Rückfallebene
- LS: Lüftspiel
- KWS: Kraft-Weg-Sensor
- BK: Bremskreis
- DG: Druckgeber
- VF: Vorfüllen
- BKV: Bremskraftverstärker
- Fo-BKV: Folge-BKV
- VB: Vorratsbehälter
- VBL: Ventilblock
- F_{SK}: Rückstellfeder SK
- F_{X}: Zusatzfeder
- AV: Auslassventil ABS
- EV: Einlassventil ABS
- Pᵥₒᵣ: Vordruck vom DHK
- FoDK: Zusatzfeder am Kolben DK
- VVB: Ventil zum Vorratsbehälter VB

## Patentansprüche

1. Betätigungsvorrichtung für eine Fahrzeugbremse, mit einer Betätigungseinrichtung, wie einem Bremspedal, zumindest einer (ersten)) Druckquelle, insbesondere Kolben-Zylinder-Einheit (Hauptzylinder), welche insbesondere mittels der Betätigungseinrichtung betätigbar ist, und mit einer weiteren (zweiten) Druckquelle, insbesondere Kolben-Zylinder-Einheit (DHK) mit einem elektro-mechanischem Antrieb, wobei die Druckquellen über eine Hydraulikleitung mit zumindest einem Bremskreis verbunden sind , um dem Bremskreis Druckmittel zuzuführen und die Fahrzeugbremse mit Druck zu beaufschlagen und mit einer Ventileinrichtung zur Regelung des Bremsdruckes, **dadurch gekennzeichnet, dass** mittels der weiteren (zweiten) Druckquelle, insbesondere mittels zumindest eines, insbesondere gestuft ausgeführten, Kolbens (DHK) der Kolben-Zylinder-Einheit (10, 10a, 10b) zumindest einem Bremskreis gesteuert in beiden Kolben-Bewegungsrichtungen, insbesondere beim Vor- und Rückhub, Druckmittel zuführbar ist.

2. Betätigungsvorrichtung nach Anspruch 1, **dadurch gekennzeichnet, dass** im Leitungsabschnitt (HL1, HL2) von der ersten Druckquelle, insbesondere Kolben-Zylinder-Einheit (Hauptzylinder) zur Ventileinrichtung (VBL) keine Ventile, insbesondere keine Schaltventile angeordnet sind.

3. Betätigungsvorrichtung nach einem der vorhergehenden Ansprüche, **dadurch gekennzeichnet, dass** die weitere (zweite) Kolben-Zylinder-Einheit (DHK) (10) zwei oder drei Druckräume (10a, 10b, 10c) bildet.

4. Betätigungsvorrichtung nach einem der vorhergehenden Ansprüche, **dadurch gekennzeichnet, dass** der ersten Druckquelle, insbesondere Kolben-Zylinder-Einheit, eine dritte Druckquelle, insbesondere Kolben-Zylinder-Einheit (Hilfskolben) vorgeschaltet ist, und dass ein Arbeitsraum einer dritten Kolben-Zylinder-Einrichtung (Hilfskolben) (16) mittels einer hydraulischen Leitung, in der eine Ventileinrichtung insbesondere zum Einspeisen von Druckmittel in den bzw. die Bremskreise geschaltet ist, angeordnet ist, mit zumindest einem Arbeitsraum der zweiten (DHK) und/oder der ersten Kolben-Zylinder-Einheit (Hauptzylinder) verbunden ist

5. Betätigungsvorrichtung nach einem der vorhergehenden Ansprüche, **dadurch gekennzeichnet, dass** zwischen einem Druckraum (10b) der weiteren (zweiten) Druckquelle, insbesondere des Doppelhubkolbens (10) und einem von der Rückseite des Kolbens (12a) der (ersten) Druckquelle, insbesondere Kolben-Zylinder-Einheit (12, 12a, 12b) begrenzten Druckraum (12c) eine hydraulische Verbindungsleitung besteht, in der zumindest ein Magnetventil (VDK), insbesondere zur Steuerung eines Kolbens der Kolben-Zylinder-Einheit, angeordnet ist.

6. Betätigungsvorrichtung nach einem der vorhergehenden Ansprüche, **dadurch gekennzeichnet, dass** ein Druckraum einer weiteren (dritten) Kolben-Zylinder-Einheit (Hilfskolbeneinheit) (16) über eine Hydraulikleitung mit einem Wegsimulator (WS) und insbesondere über ein Magnetventil (ESV) mit zumindest einem Bremskreis verbunden ist.

7. Betätigungsvorrichtung nach einem der Ansprüche 4 bis 6, **dadurch gekennzeichnet, dass** die weitere (dritte) Kolben-Zylinder-Einheit (16), welche insbesondere eine Hilfskolbeneinheit ist, einen Kraft-Weg-Simulator (KWS) aufweist.

8. Betätigungsvorrichtung nach einem der vorhergehenden Ansprüche, **dadurch gekennzeichnet, dass** in die die erste und zweite Druckquelle bzw. Kolben-Zylinder-Einheit mit der Ventileinrichtung (VBL) verbindenden ersten und zweiten hydraulischen Leitung Magnetventile (EA) angeordnet sind und dass in nur einer dieser Leitungen bzw. der von der zweiten Kolben-Zylinder-Einheit zur Ventileinrichtung (VBL) führenden hydraulischen Leitung (HL1,HL2), vorzugsweise in die Leitung (HL2), ein Drucksensor (DG) angeordnet ist.

9. Betätigungsvorrichtung nach einem der vorhergehenden Ansprüche, **dadurch gekennzeichnet, dass** in die Druckräume (10a, 10b) der zweiten Kolben-Zylinder-Einheit (DHK) miteinander verbindende hydraulische Leitungen Rückschlagventile (V3, V4) oder Magnetventile (AS, VF), insbesondere zur Steuerung der Druckmittel Zu- und Abfuhr, angeordnet sind.

10. Betätigungsvorrichtung nach einem der vorhergehenden Ansprüche, **dadurch gekennzeichnet, dass** eine Diagnoseschaltung zum Test von Dichtungen, insbesondere Dichtungen des Druckstangenkolben (DK), des Schwimmkolbens (SK) und/oder des Doppelhubkolbens (DHK) vorgesehen ist.

11. Betätigungsvorrichtung nach einem der vorhergehenden Ansprüche, **dadurch gekennzeichnet, dass** die zweite Druckquelle eine motorgetriebene Pumpe mit zugeordnetem Magnetventil (AVMUX) oder/und Rückschlagventil (RV) aufweist.

12. Verfahren zum Betrieb einer Bremsvorrichtung, nach einem der vorhergehenden Ansprüche, **dadurch gekennzeichnet, dass** der Rückseite eines Kolbens, einer ersten Kolben-Zylinder-Einheit mittels einer Druckquelle, insbesondere zweiten einer Kolben-Zylinder-Einheit, Druckmittel zugeführt wird, wobei insbesondere mittels Druckquelle, insbesondere einer Kolben-Zylinder-Einheit, Druck in Bremskreisen ohne Verwendung von Trennventilen erzeugt wird und dass mittels zumindest eines Magnetventiles verschiedene Betriebsmodi, wie Vorfüllen, ABS, max. Pedalkraft bzw. max. Aussteuerung des Wegsimulators, Rückfallebene gesteuert werden.

13. Betätigungssystem für eine Fahrzeugbremse, mit einer Betätigungseinrichtung, wie einem Bremspedal, zumindest einer ersten Druckquelle, insbesondere Kolben-Zylinder-Einheit (Hauptzylinder), welche insbesondere mittels der Betätigungseinrichtung betätigbar ist und einer zweiten Druckquelle, insbesondere Kolben-Zylinder-Einheit (DHK), mit einem elektromechanischen Antrieb, wobei die Druckquellen jeweils über eine Hydraulikleitung mit zumindest einem Bremskreis verbunden sind, um dem Bremskreis Druckmittel zuzuführen und die Fahrzeugbremse mit Druck zu beaufschlagen, und mit einer Ventileinrichtung zur Regelung des Bremsdruckes, nach einem der vorhergehenden Ansprüche, **dadurch gekennzeichnet, dass** die erste Druckquelle, insbesondere Kolben-Zylinder-Einheit (Hauptzylinder) nur einen einzigen druckerzeugenden Kolben (SK) aufweist.

14. Betätigungssystem nach einem der vorhergehenden Ansprüche, **dadurch gekennzeichnet, dass** zumindest ein Druckraum (10a, 10b) der zweiten Druckquelle, insbesondere Kolben-Zylinder-Einheit (DHK) mit einem auf der Rückseite des Kolbens (DK, SK) der ersten Kolben-Zylinder-Einheit (HZ)gebildeten Druck- bzw. Arbeitsraum (12c), insbesondere über eine Ventileinrichtung hydraulisch verbunden ist.

15. Betätigungssystem nach einem der vorhergehenden Ansprüche, **dadurch gekennzeichnet, dass** der Arbeitsraum des Kolbens (SK) über ein Schnüffelloch und über ein Magnetventil (V_{VB}) oder eine Drossel-Rückschlagventil-Anordnung (D, SV) mit einem Vorratsbehälter (VB) verbunden ist.

16. Betätigungssystem nacheinem der vorhergehenden Ansprüche, **dadurch gekennzeichnet, dass** die Betätigungseinrichtung, insbesondere mittels eines Pedalstößels (3)auf eine Feder (F1) oder Federkombination des Kolbens (SK) wirkt.

17. Betätigungssystem nach einem der vorhergehenden Ansprüche, **dadurch gekennzeichnet, dass** in einer hydraulischen Leitung von der dritten Kolben-Zylinder Einheit (Hilfskolben) zum Wegsimulator (WS) und zu den Bremskreisen (HL1,HL2) ein stromlos offenes Magnetventil (ESV) angeordnet ist.

18. Betätigungssystem nach einem der vorhergehenden Ansprüche, **dadurch gekennzeichnet, dass** in einer hydraulischen Leitung von der dritten Kolben-Zylinder Einheit (Hilfskolben) zum Wegsimulator (WS)und zu einem Vorratsbehälter (VB) ein stromlos geschlossenes Magnetventil (WA) angeordnet ist.

## Claims

1. Actuating mechanism for a vehicle brake, having an actuating device, such as a brake pedal, at least one (first) pressure source, in particular piston-cylinder unit (main cylinder), which can be actuated in particular by means of the actuating device, and having a further (second) pressure source, piston-cylinder unit (DHK) having an electro-mechanical drive, wherein the pressure sources are connected by a hydraulic line to at least one brake circuit in order to supply the brake circuit with pressurising medium and to load the vehicle brake with pressure, and having a valve device for regulating the brake pressure, **characterised in that** by means of the further (second) pressure source, in particular by means of at least one piston (DHK), in particular with a graduated design, of the piston-cylinder unit (10, 10a, 10b), pressurising medium can be supplied to at least one brake circuit so as to be controlled in both directions of movement of the piston, in particular during the pre-stroke and return stroke.

2. Actuating mechanism according to claim 1, **characterised in that** no valves, in particular no switching valves, are arranged in the line section (HL1, HL2) from the first pressure source, in particular piston-cylinder unit (main cylinder), to the valve device (VBL).

3. Actuating mechanism according to either of the preceding claims, **characterised in that** the further (second) piston-cylinder unit (DHK) forms two or three pressure chambers (10a, 10b, 10c).

4. Actuating mechanism according to any one of the preceding claims, **characterised in that** a third pressure source, in particular piston-cylinder unit (auxiliary piston), is connected upstream of the first pressure source, in particular piston-cylinder unit, and that a working space of a third piston-cylinder device (auxiliary piston) (16) is connected by means of a hydraulic line, in which a valve device is connected in particular for feeding pressurising medium into the brake circuit(s), [*sic: is arranged*] to at least one working space of the second (DHK) and/or the first piston-cylinder unit (main cylinder).

5. Actuating mechanism according to any one of the preceding claims, **characterised in that** there is a hydraulic connecting line between a pressure chamber (10b) of the further (second) pressure source, in particular the double-stroke piston (1), and a pressure chamber (12c) delimited from the back of the piston (12a) of the first pressure source, in particular piston-cylinder unit (12, 12a, 12b), in which line at least one solenoid valve (VDK) is arranged, in particular for controlling a piston of the piston-cylinder unit.

6. Actuating mechanism according to any one of the preceding claims, **characterised in that** a pressure chamber of a further (third) piston-cylinder unit (auxiliary piston unit) (16) is connected by a hydraulic line to a path simulator (WS) and in particular by a solenoid valve (ESV) to at least one brake circuit.

7. Actuating mechanism according to any one of claims 4 to 6, **characterised in that** the further (third) piston-cylinder unit (16), which is in particular an auxiliary piston unit, has a force-path simulator (KWS).

8. Actuating mechanism according to any one of the preceding claims, **characterised in that** solenoid valves (EA) are arranged in the first and second hydraulic lines connecting the first and second pressure sources or piston-cylinder unit to the valve device (VBL), and **in that** a pressure sensor (DG) is arranged in only one of these lines or the hydraulic line (HL1, HL2) leading from the second piston-cylinder unit to the valve device (VBL) .

9. Actuating mechanism according to any one of the preceding claims, **characterised in that** check valves (V3, V4) or solenoid valves (AS, VF), in particular for controlling the supply and removal of pressurising medium, are arranged in hydraulic lines that connect the pressure chambers (10a, 10b) of the second piston-cylinder unit (DHK) to each other.

10. Actuating mechanism according to any one of the preceding claims, **characterised in that** a diagnostic circuit is provided for testing seals, in particular seals of the pressure rod pistons (DK), the floating piston (SK) and/or the double-stroke piston (DHK).

11. Actuating mechanism according to any one of the preceding claims, **characterised in that** the second pressure source has a motor-driven pump with associated solenoid valve (AVMUX) or/and check valve (RV).

12. Method for operating a brake mechanism according to any one of the preceding claims, **characterised in that** pressurising medium is supplied to the back of a piston, of a first piston-unit, by means of a pressure source, in particular second of a piston-cylinder unit, wherein pressure is generated in brake circuits, in particular by means of pressure source, in particular of a piston-cylinder unit, without using isolation valves, and that various operating modes, such as pre-filling, ABS, maximum pedal force or maximum control range of the path simulator, fall-back level, are controlled by means of at least one solenoid valve.

13. Actuating system for a vehicle brake, having an actuating device, such as a brake pedal, at least one first pressure source, in particular piston-cylinder unit (main cylinder), which can be actuated in particular by means of the actuating device, and a second pressure source, in particular piston-cylinder unit (DHK), having an electro-mechanical drive, wherein the pressure sources are each connected by a hydraulic line to at least one brake circuit in order to supply pressurising medium to the brake circuit and to load the vehicle brake with pressure, and to a valve device for regulating the brake pressure according to any one of the preceding claims, **characterised in that** the first pressure source, in particular piston-cylinder unit (main cylinder), has only a single pressure-generating piston (SK).

14. Actuating system according to any one of the preceding claims, **characterised in that** at least one pressure chamber (10a, 10b) of the second pressure source, in particular piston-cylinder unit (DHK), is hydraulically connected), in particular by a valve device, to a pressure chamber or working space (12c) formed on the back of the piston (DK, SK) of the first piston-cylinder unit (HZ.

15. Actuating system according to any one of the preceding claims, **characterised in that** the working space of the piston (SK) is connected by an expansion port and by a solenoid valve (V_{VB}) or a throttle-check valve assembly (D, SV) to a reservoir (VB).

16. Actuating system according to any one of the preceding claims, **characterised in that** the actuating device acts, in particular by means of a pedal ram (3), on a spring (F1) or spring combination of the piston.

17. Actuating system according to any one of the preceding claims, **characterised in that** a currentless open solenoid valve (ESV) is arranged in a hydraulic line from the third piston-cylinder unit (auxiliary piston) to the path simulator (WS) and to the brake circuits (HL1, HL2).

18. Actuating system according to any one of the preceding claims, **characterised in that** a currentless closed solenoid valve (WA) is arranged in a hydraulic line from the third piston-cylinder unit (auxiliary piston) to the path simulator (WS) and to a reservoir (VB).

## Revendications

1. Arrangement d'actionnement pour un frein de véhicule, comprenant un dispositif d'actionnement, comme une pédale de frein, au moins une (première) source de pression, notamment un ensemble piston-cylindre (maître-cylindre), lequel peut notamment être actionné au moyen du dispositif d'actionnement, et comprenant une (deuxième) source de pression supplémentaire, notamment un ensemble piston-cylindre (DHK) pourvu d'un mécanisme d'entraînement électromécanique, les sources de pression étant reliées par le biais d'une conduite hydraulique à au moins un circuit de frein afin d'acheminer au circuit de frein un fluide sous pression et de charger le frein de véhicule avec une pression, et comprenant un dispositif à vanne destiné à réguler la pression de freinage, **caractérisé en ce que** du fluide sous pression peut être acheminé de manière commandée à au moins un circuit de frein dans les deux sens de déplacement du piston, notamment lors d'une excursion aller et retour, au moyen de la (deuxième) source de pression supplémentaire, notamment au moyen d'au moins un piston (DHK) réalisé étagé de l'ensemble piston-cylindre (10, 10a, 10b).

2. Arrangement d'actionnement selon la revendication 1, **caractérisé en ce qu'**aucune vanne, notamment aucune vanne de commutation, n'est disposée dans la portion de conduite (HL1, HL2) de la première source de pression, notamment l'ensemble piston-cylindre (maître-cylindre), au dispositif à vanne (VBL).

3. Arrangement d'actionnement selon l'une des revendications précédentes, **caractérisé en ce que** le (deuxième) ensemble piston-cylindre (DHK) supplémentaire (10) forme deux ou trois chambres de pression (10a, 10b, 10c).

4. Arrangement d'actionnement selon l'une des revendications précédentes, **caractérisé en ce que** la première source de pression, notamment l'ensemble piston-cylindre, est branchée en amont d'une troisième source de pression, notamment un ensemble piston-cylindre (piston auxiliaire), et **en ce qu'**une chambre de travail d'un troisième dispositif à piston-cylindre (piston auxiliaire) (16) est reliée au moyen d'une conduite hydraulique, dans laquelle est disposé un dispositif à vanne servant notamment à injecter du fluide sous pression dans le ou les circuits de frein, à au moins une chambre de travail du deuxième (DHK) et/ou du premier ensemble piston-cylindre (maître-cylindre).

5. Arrangement d'actionnement selon l'une des revendications précédentes, **caractérisé en ce qu'**entre une chambre de pression (10b) de la (deuxième) source de pression supplémentaire, notamment le piston à double course (10) et une chambre de pression (12c) délimitée par le côté arrière du piston (12a) de la (première) source de pression, notamment l'ensemble piston-cylindre (12, 12a, 12b), se trouve une conduite de liaison hydraulique dans laquelle est disposée au moins une électrovanne (VDK), notamment destinée à commander un piston de l'ensemble piston-cylindre.

6. Arrangement d'actionnement selon l'une des revendications précédentes, **caractérisé en ce qu'**une chambre de pression d'un (troisième) ensemble piston-cylindre supplémentaire (piston auxiliaire) (16) est reliée par le biais d'une conduite hydraulique à un simulateur de course (WS) et notamment à au moins un circuit de frein par le biais d'une électrovanne (ESV) .

7. Arrangement d'actionnement selon l'une des revendications 4 à 6, **caractérisé en ce que** le (troisième) ensemble piston-cylindre supplémentaire (16), lequel est notamment un ensemble piston auxiliaire, possède un simulateur de force-course (KWS) .

8. Arrangement d'actionnement selon l'une des revendications précédentes, **caractérisé en ce que** des électrovannes (EA) sont disposées dans les première et deuxième conduites hydrauliques qui relient les première et deuxième sources de pression ou ensembles piston-cylindre au dispositif à vanne (VBL) et **en ce qu'**un capteur de pression (DG) est disposé dans une seule de ces conduites ou dans la conduite hydraulique (HL1, HL2) qui mène du deuxième ensemble piston-cylindre au dispositif à vanne (VBL), de préférence à la conduite (HL2).

9. Arrangement d'actionnement selon l'une des revendications précédentes, **caractérisé en ce que** des clapets anti-retour (V3, V4) ou des électrovannes (AS, VF), servant notamment à commander l'arrivée et le départ du fluide sous pression, sont disposés dans les conduites hydrauliques qui relient entre elles les chambres de pression (10a, 10b) du deuxième ensemble piston-cylindre (DHK).

10. Arrangement d'actionnement selon l'une des revendications précédentes, **caractérisé en ce qu'**un circuit de diagnostic destiné au test des garnitures d'étanchéité, notamment des garnitures d'étanchéité du piston à tige-poussoir (DK), du piston flottant (SK) et/ou du piston à double course (DHK) est présent.

11. Arrangement d'actionnement selon l'une des revendications précédentes, **caractérisé en ce que** la deuxième source de pression possède une pompe à entraînement motorisé avec électrovanne (AVMUX) associée et/ou clapet anti-retour (RV) associé.

12. Procédé pour faire fonctionner un arrangement de freinage selon l'une des revendications précédentes, **caractérisé en ce qu'**un fluide sous pression est acheminé au côté arrière d'un piston d'un premier ensemble piston-cylindre au moyen d'une source de pression, notamment un deuxième ensemble piston-cylindre, une pression étant générée dans des circuits de freinage sans utiliser des vannes de séparation, notamment au moyen d'une source de pression, notamment un ensemble piston-cylindre, et **en ce que** différents modes de fonctionnement, comme la préinjection, l'ABS, la force de pédale maximale ou l'excitation maximale du simulateur de course, le plan de recul sont commandés au moyen d'au moins une électrovanne.

13. Système d'actionnement pour un frein de véhicule, comprenant un dispositif d'actionnement, comme une pédale de frein, au moins une première source de pression, notamment un ensemble piston-cylindre (maître-cylindre), lequel peut notamment être actionné au moyen du dispositif d'actionnement, et une deuxième source de pression, notamment un ensemble piston-cylindre (DHK) pourvu d'un mécanisme d'entraînement électromécanique, les sources de pression étant respectivement reliées par le biais d'une conduite hydraulique à au moins un circuit de frein afin d'acheminer au circuit de frein un fluide sous pression et de charger le frein de véhicule avec une pression, et comprenant un dispositif à vanne destiné à réguler la pression de freinage selon l'une des revendications précédentes, **caractérisé en ce que** la première source de pression, notamment l'ensemble piston-cylindre (maître-cylindre), ne possède qu'un seul piston (SK) générateur de pression.

14. Système d'actionnement selon l'une des revendications précédentes, **caractérisé en ce qu'**au moins une chambre de pression (10a, 10b) de la deuxième source de pression, notamment l'ensemble piston-cylindre (DHK), est reliée hydrauliquement à une chambre de pression ou de travail (12c) formée sur le côté arrière du piston (DK, SK) du premier ensemble piston-cylindre (HZ), notamment par le biais d'un dispositif à vanne.

15. Système d'actionnement selon l'une des revendications précédentes, **caractérisé en ce que** la chambre de travail du piston (SK) est reliée à un réservoir (VB) par le biais d'un reniflard et par le biais d'une électrovanne (V_{VB}) ou d'un arrangement de clapet anti-retour à étranglement (D, SV).

16. Système d'actionnement selon l'une des revendications précédentes, **caractérisé en ce que** le dispositif d'actionnement agit, notamment au moyen d'un poussoir de pédale (3), sur un ressort (F1) ou une combinaison de ressorts du piston (SK).

17. Système d'actionnement selon l'une des revendications précédentes, **caractérisé en ce qu'**une électrovanne (ESV) ouverte au repos est disposée dans une conduite hydraulique du troisième ensemble piston-cylindre (piston auxiliaire) au simulateur de course (WS) et aux circuits de frein (HL1, HL2).

18. Système d'actionnement selon l'une des revendications précédentes, **caractérisé en ce qu'**une électrovanne (WA) fermée au repos est disposée dans une conduite hydraulique du troisième ensemble piston-cylindre (piston auxiliaire) au simulateur de course (WS) et au réservoir (VB).
